(19) Europäisches Patentamt
European Patent Office
Office européen des brevets

(11) EP 0 789 731 B1

(12) EUROPEAN PATENT SPECIFICATION

(45) Date of publication and mention of the grant of the patent:
**09.06.1999 Bulletin 1999/23**

(21) Application number: **95935872.2**

(22) Date of filing: **03.11.1995**

(51) Int Cl.[6]: **C09D 5/16**

(86) International application number:
**PCT/DK95/00438**

(87) International publication number:
**WO 96/14362 (17.05.1996 Gazette 1996/22)**

# (54) SEA WATER-ERODIBLE ANTIFOULING PAINT COMPOSITION

DURCH SEEWASSER ERODIERBARES, FÄULNISVERHINDERNDES ANSTRICHMITTEL

COMPOSITION DE PEINTURE ANTIFOULING ERODABLE A L'EAU DE MER

(84) Designated Contracting States:
**DK GB NL**

(30) Priority: **03.11.1994 DK 127294**

(43) Date of publication of application:
**20.08.1997 Bulletin 1997/34**

(73) Proprietor: **J.C. HEMPEL'S SKIBSFARVE-FABRIK A/S**
**DK-2800 Lyngby (DK)**

(72) Inventors:
- **WARNEZ, Michel, Yves**
  **DK-2720 Vanlöse (DK)**
- **CHRISTENSEN, Thomas**
  **DK-2665 Vallensbäk Strand (DK)**
- **URBAN, Claus**
  **DK-2000 Frederiksberg (DK)**

(74) Representative:
**Plougmann, Vingtoft & Partners A/S**
**Sankt Annae Plads 11,**
**P.O. Box 3007**
**1021 Copenhagen K (DK)**

(56) References cited:
**WO-A-93/02146**
**FR-A- 2 165 881**
**GB-A- 1 409 048**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 789 731 B1

**Description**

FIELD OF THE INVENTION

The present invention relates to sea water-erodible anti-fouling paint compositions for protecting marine surfaces, in particular for protecting water crafts.

BACKGROUND OF THE INVENTION

For a number of years, intensive use has been made of sea water-erodible antifouling paint compositions in which the polymer used as the binder is a trialkyltin derivative of a polymer containing carboxylic acid groups in the monomer segments, the alkyltin groups being situated on the carboxylic acid groups. The principle according to which such paints are erodible is that the carboxyl-alkyltin function slowly hydrolyzes in sea water, i.a. due to the slight alkalinity (pH approx. 8) of sea water. The result of the hydrolysis is partly that biocidal tin compounds are released, partly that the remaining polymer which now comprises free carboxylic acid groups becomes water erodible or soluble. Thus, the overall effect is that the outer layers of the paint coating on the ship's hull slowly dissolve or erode and thereby uncover deeper paint layers which are then eroded away in the same manner.

However, the increasing problem of pollution with tin compounds in harbours as well as the emergence of antifouling components not based on tin or other undesirable metals has lead to intensive research efforts to provide tin-free sea water-erodible antifouling paints. To a large extent, efforts have concentrated on finding other polymers that are capable of exploiting the same basic principle, namely that side groups on the polymer chain are hydrolyzed by the sea water which then causes the polymer to become water soluble and therefore to dissolve and to cause the paint coating to erode.

Thus, WO 84/02915 describes marine paints of which it is claimed that they are erodible because the polymers in the paints hydrolyze in sea water although the only hydrolysis tests carried out are performed in a medium more alkaline than sea water, namely with a pH value of 9 and at a fairly high temperature, namely 35°C. Furthermore, the only other tests carried out on the paints were long-term tests of the antifouling properties on stationary fiberglass panels submerged at an ocean test site. Thus, no actual determination of any erosion properties of the paint in sea water and when coated on to moving surfaces was carried out.

It is the object of the present invention to provide a non-hydrolyzable sea water-erodible antifouling paint composition free of undesirable metals, in particular tin-free, for protecting surfaces of marine structures in order to reduce the fouling of such surfaces, in particular the outer surfaces of ships' hulls.

WO 93/02146 describes non-hydrolysable sea water-erodible antifouling paint compositions based on polymers having a polyethylene skeleton carrying alkylene oxide functional side chains, e.g., via ester or amide linkers.

A further object is to provide marine structures having an improved anti-fouling coating of a sea water-erodible, non-hydrolyzable free of undesirable metals, in particular tin-free, coating film.

Still another object of the invention is to provide a method of protecting a watercraft against aquatic fouling involving a first painting step in which a non-hydrolyzable, sea water-erodible antifouling paint composition free of undesirable metals, in particular tin-free, antifouling paint coating is applied to the part of the exterior of the craft which, during operation of the craft, is immersed in water, sailing the watercraft, and performing a subsequent painting step with an erodible antifouling paint.

SUMMARY OF THE INVENTION

It has been found that the above objects can be obtained by using coatings comprising a film forming binder system, which binder system contains certain polymers which confer sea water erodibility to the binder system where the sea water erodibility is not caused by hydrolysis of the polymers. Instead, it is believed that the erodibility is due to the polymers having a suitable hydrophilicity and consequent water absorption properties in sea water which results in a poor mechanical strength of the outermost parts of a paint coating once sea water-soluble pigments therein have been leached out from those outermost parts, the mechanically weakened outer parts of the paint being removed by the action of sea water moving against the surface carrying the coating.

Thus, the invention provides a sea water-erodible antifouling paint composition for protecting marine surfaces, comprising a binder system, at least one pigment which is soluble in sea water in an amount of at least 1 mg/litre at 25°C, at least one antifouling agent which may be the pigment or one of the pigments, the total pigment content of the composition being in the range of 10-60% of the solids volume of the paint composition, the sea water-soluble pigment or pigments constituting at least 10% of the solids volume of the paint composition, any sea water-insoluble pigments, when present, constituting at the most 50% of the solids volume of the paint composition,

said binder system comprising at least one erodibility-conferring polymer of the general formula (I)

$$X\text{-}D^3\text{-}A\text{-}Y \qquad (I)$$

wherein A is a polymer chain consisting of

a) from 1 to 5 segment sets

$$-[R^1{}_i\text{-}D^1{}_i]_{m(i)}-$$

where the suffix i denotes the segment set number, and wherein each m(i) is an integer being at the most 100 with the proviso that the sum of the parameters m(i) is in the range 1-300, and

b) from 0 to 8 segment sets

$$-[R^2{}_j\text{-}D^2{}_j]_{n(j)}-$$

where the suffix j denotes the segment set number, and wherein each n(j) is an integer being at the most 100 with the proviso that the sum of the parameters n(j) is at the most 300,

the individual segments $R^1{}_i$-$D^1{}_i$ and $R^2{}_j$-$D^2{}_j$ being linked together in the polymer chain A as a statistical copolymer, an alternating copolymer, a block copolymer or a combination thereof;

$R^1{}_i$ within a segment set is a group of the formula (III)

$$-(R_x\text{-}O)_p\text{-}(R_y\text{-}O)_q\text{-}(R_z\text{-}O)_r\text{-}R_v- \qquad (III)$$

wherein $R_x$, $R_y$, $R_z$ and $R_v$ independently are $C_{1-4}$-alkylene, and p, q, and r are integers in the range 0-100 with the proviso that the sum p + q + r is at least 1;

$R^2{}_j$ within a segment set is alkylene, alkenylene, arylene, alkylarylene, alkylarylalkylene, arylalkylarylene, or heterocyclylene which may be optionally substituted;

$D^1{}_i$ within a segment set, $D^2{}_j$ within a segment set, and $D^3$ independently are -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-, -C(O)-S-,-S-C(O)-, -O-C(O)-O-, -C($R_0$)=N-, -N=C($R_0$)-, -N($R_0$)-$CH_2$-CH(OH)-$CH_2$-O-, -O-$CH_2$-CH(OH)-$CH_2$-N($R_0$)-, or -N($R_0$)-C(O)-N($R_0$)-, wherein $R_0$ is $C_{1-12}$ alkyl, aryl or H; and

X and Y independently are hydrogen, alkyl, aryl or heterocyclyl which may be optionally substituted.

Thus, with respect to the same principles described above for the construction of the linear polymers of formula I, the invention further provides a sea water-erodible antifouling paint composition as above, but where the binder system is replaced by a binder system comprising at least one erodibility-conferring polymer of the general formula (II)

$$X\text{-}D^3\text{-}B\text{-}Y \qquad (II)$$

wherein B is a polymer chain consisting of

a) from 0 to 5 segment sets

$$-[R^1{}_i\text{-}D^1{}_i]_{m(i)}-$$

where the suffix i denotes the segment set number, and wherein each m(i) is an integer being at the most 100 with the proviso that the sum of the parameters m(i) is in the range 1-300, and

b) from 0 to 8 segment sets

$$-[R^2{}_j-D^2{}_j]_{n(j)}-$$

where the suffix j denotes the segment set number, and wherein each n(j) is an integer being at the most 100 with the proviso that the sum of the parameters n(j) is at the most 300,

c) from 1 to 3 segment sets

$$\begin{array}{l}-[R^3{}_k-E_k-R^4{}_k-D^4{}_k]_{s(k)}-\\ \qquad\quad\;\;|\\ \qquad\quad R^5{}_k-D^5{}_k]-\end{array}$$

where the suffix k denotes the segment set number, and wherein each s(k) is an integer being at the most 50 with the proviso that the sum of the parameters s(k) is at the most 100,
with the proviso that at least one of the segment sets defined in a) and b) is present in the polymer,
the individual segments $R^1{}_i$-$D^1{}_i$, $R^2{}_j$-$D^2{}_j$, and $R^3{}_k$-$E_k$<($R^5{}_k$-$D^5{}_k$-)-$R^4{}_k$-$D^4{}_k$- being linked together in the polymer B as a branched statistical copolymer, an alternating copolymer, a branched block copolymer or a combination thereof;

$R^1{}_i$ within a segment set is a group of the formula (III)

$$-(R_x-O)_p-(R_y-O)_q-(R_z-O)_r-R_v- \qquad \text{(III)}$$

wherein $R_x$, $R_y$, $R_z$ and $R_v$ independently are $C_{1-4}$-alkylene, and p, q, and r are integers in the range 0-100 with the proviso that the sum p + q + r is at least 1;

$R^2{}_j$ within a segment set is alkylene, alkenylene, arylene, alkylarylene, alkylarylalkylene, arylalkylarylene, or heterocyclylene which may be optionally substituted;

$R^3{}_k$, $R^4{}_k$, and $R^5{}_k$ within a segment are the same biradicals as defined above for $R^1{}_i$ and $R^2{}_j$ or a single bond;

$D^1{}_i$ within a segment set, $D^2{}_j$ within a segment set, and $D^3$ independently are -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-,-C(O)-S-, -S-C(O)-, -O-C(O)-O-, -C($R_0$)=N-, -N=C($R_0$)-, -N($R_0$)-$CH_2$-CH(OH)-$CH_2$-O-, -O-$CH_2$-CH(OH)-$CH_2$-N($R_0$)-, or -N($R_0$)-C(O)-N($R_0$)-, wherein $R_0$ is $C_{1-12}$ alkyl, aryl or H; and

$D^4{}_k$ within a segment set and $D^5{}_k$ within a segment set are the same as defined above for $D^1{}_i$ or a single bond;

$E_k$ within a segment set is selected from >$CR^5$-, >N-, >P-, >P(=O)-, >Si($R^6$)-, aryl triradicals, cycloalkyl triradicals and heterocyclyl triradicals which are optionally substituted, where $R^5$ is hydrogen, hydroxy, $C_{1-12}$-alkoxy, $C_{1-12}$-alkyl, $C_{2-12}$-alkenyl, aryl or $D^3$-H, and $R^6$ is hydrogen, $C_{1-12}$-alkyl, $C_{1-12}$-alkoxy, $C_{2-12}$-alkenyl, or aryl; and

X and Y independently are hydrogen, alkyl, aryl or heterocyclyl which may be optionally substituted.

DETAILED DESCRIPTION OF THE INVENTION

In the present context, the term "erodible" is intended to mean that the coating in question and under the test conditions described is subject to a reduction of the thickness of the coating of at least 1 μm per 10,000 nautical miles of relative movement between the coated surface and the surrounding aqueous medium due to removal of coating

material from the surface of the coating.

In the present context the term "erodibility-conferring polymer" is intended to mean a polymer of formula I or of formula II that, when incorporated in the binder system of a coating composition S of the following composition, stated as solids volume parts:

30 parts of the polymer of formula I or II,
30 parts of gum rosin,
10 parts by volume of cuprous oxide with an average particle size of 2-4 μm,
26 parts by volume of zinc oxide with an average particle size of approximately 0.2 μm, and
4 parts by volume of thixotropic bentonite,

results in an erosion rate of the coating in sea water with a salinity in the range of 37-38 parts per thousand of at least 1 μm per 10,000 nautical miles when the coating composition has been applied on and has been allowed to form a continuous film on the convex surface of a cylinder of diameter 1 meter and the coated cylinder is rotated with a peripheral speed of 15 knots in sea water of a temperature between 10 and 30°C.

In the present context the term "marine" relates to any kind of aqueous environment such as salt, brackish or fresh water.

In the present context the term "marine surface" is intended to mean any surface or object exposed to a marine environment, e.g. the surface of vessels (including boats, yachts, motorboats, motor launches, ocean liners, tugboats, tankers, container ships and other cargo ships, submarines (both nuclear and conventional), and naval vessels of all types), pipes, shore and off-shore machinery, constructions and objects of all types such as piers, pilings, floatation devices, bridge substructures, underwater oil well structures, nets and other aquatic culture installations, and buoys etc.

As indicated above, the polymer chain A consists of up to a total of 13 segment sets, namely up to 5 segment sets $-[R^1_i-D^1_i]_{m(i)}-$ and up to 8 segment sets $-[R^2_j-D^2_j]_{n(j)}-$. In the present context, the term "segment set" is intended to signify the presence in the polymer chain A of a number of identical segments $R^1_i-D^1_i$ and a number of identical segments $R^2_j-D^2_j$, the number of segments in each segment set being m(i) and n(j), respectively. This means that if the polymer chain A consists of for example 2 segment sets $-[R^1_i-D^1_i]_{m(i)}-$ (i = 1, 2) and 2 segment sets $-[R^2_j-D^2_j]_{n(j)}-$ (j = 1, 2), the groups $R^1_1$ (m(i) in number) in the first segment set $-[R^1_1-D^1_1]_{m(1)}-$ are identical to one another, and the groups $D^1_1$ (m(i) in number) in the first segment set are identical to another, but that $R^1_1$ is different from $R^1_2$ in the other segment set $-[R^1_2-D^1_2]_{m(2)}-$ and/or $D^1_1$ is different from $D^1_2$ in the other segment set, just as the parameters m (1) and m(2) may be different; the same principle applies to the two segment sets $-[R^2_1-D^2_1]_{n(1)}-$ and $-[R^2_2-D^2_2]_{n(2)}-$ in this example.

As indicated, the individual segments from all the segment sets of the main types defined in a), b), and, where applicable, c) herein may further be linked together in the polymer chain A, or B, as a statistical copolymer (i.e. that segments from all the various sets appear in a statistical order), as a block copolymer (i.e. that if monomers having different functional groups A, B, C in the monomer are being used (e.g. A-B, A-C) a certain number of identical segments from the same set appear in sequence (e.g. -(A-B-)-(-A-B-)-(-A-B-)-) before the appearance of a sequence of a certain number of identical segments from another segment set (e.g -(A-C-)-(-A-C-)-(-A-C-)-), or, if monomers having identical functional groups in the monomer are being used (e.g. A-A, B-B, C-C) a certain number of identical sequences of two segments derived from two different monomers appear in sequence (e.g. - (A-A-B-B-)- (A-A-B-B-)- (A-A-B-B-)-) before the appearance of a sequence of a certain number of identical sequences of two segments derived from two different monomers (e.g. -(A-A-C-C-)-(A-A-C-C-)-(A-A-C-C-)-)), as an alternating copolymer (i.e. that if monomers having different functional groups A, B, C in the monomer are being used (e.g. A-B, A-C) identical segments from the same set appear alternating to identical segments from another segment set (e.g. -(A-B-)-(-A-C-)-(-A-B-)-(-A-C-)-), or, if monomers having identical functional groups in the monomer are being used (e.g. A-A, B-B, C-C) two segments derived from two different monomers appear in alternating sequence (e.g. - (A-A-B-B-)-(A-A-C-C-)-(A-A-B-B-)-(A-A-C-C-)-), or the structure of the polymer chain A, or B, is a combination of a statistical copolymer, an alternating copolymer, and/or a block copolymer structure.

The branched polymer B consists of up to a total of 16 segment sets, namely up to 5 segment sets $-[R^1_i-D^1_i]_{m(i)}-$, up to 8 segment sets $-[R^2_j-D^2_j]_{n(j)}-$, and up to 3 segment sets $R^3_k-E_k<(R^5_k-D^5_k-)-R^4_k-D^4_k-$. The same principles as above with respect to statistical, alternating, and block copolymers structures also apply for the polymers of formula II. However, with respect to the polymers of formula II, the number of end groups X and Y is between 2 and ($\Sigma$s(k)+2). In the case where branching of the polymer chain is facilitating the formation of a network having loops, e.g. by intramolecular cross-linking reactions, the number of end groups may be less than $\Sigma$s(k)+2, e.g. two, whereas the formation of a structure having no loops, e.g. a dendritic structure, may result in a polymer having ($\Sigma$s(k)+2) end groups. Where two or more groups Y are present, these may be identical or different, preferably they are identical.

With respect to the above definition of in particular $D^1_i$, $D^2_j$, $D^4_k$, and $D^5_k$ but also $D^3$, it is from a point of view

of ease of preparation preferred that the D-groups in the segments are of the same chemical nature, e.g. of the ester kind as for -C(O)-O- and -O-C(O)-, or of the amide kind as for -C(O)-N($R_0$)- and -N($R_0$)-C(O)-. However, it is also possible for D-groups of different kinds to be present in one molecule of the polymer of formula I or II. In such a case, some combinations are more suitable than others which is described in the following. The types of groups $D^1{}_i$, $D^2{}_j$, $D^4{}_k$, $D^5{}_k$, and $D^3$ defined above and designated types 1-17 are as follows: -C(O)-O- (type 1), -O-C(O) - (type 2), -C(O)-N($R_0$)- (type 3), -N($R_0$)-C(O)- (type 4), -O- (type 5), -S- (type 6), -N($R_0$)- (type 7), -O-C(O)-N($R_0$)- (type 8), -N($R_0$)-C(O)-O- (type 9), -C(O)-S- (type 10), -S-C(O)- (type 11), -O-C(O)-O- (type 12), -C($R_0$)=N- (type 13), -N=C($R_0$)- (type 14), -N($R_0$)-$CH_2$-CH(OH)-$CH_2$-O- (type 15) -O-$CH_2$-CH(OH)-$CH_2$-N($R_0$)-(type 16), and -N($R_0$)-C(O)-N($R_0$)- (type 17).

With respect to the preferred meanings of the groups $D^4{}_k$ and $D^5{}_k$, these groups may also independently designate a single bond (type 18).

In a compound of formula I or II, any one type of group in the list above can be combined with any other type of group. The types may suitably be intercombined in the following manner: Type 1 with types 2-6, 8-11, and 15-17; type 2 with types 3-6, 8-11, and 15-17; type 3 with types 4-5, 7-9, and 15-17; type 4 with types 5, 7-9, and 15-17; type 5 with types 6-17; type 6 with types 10 and 11; type 7 with types 13-17; type 8 with types 9 and 15-17; type 9 with types 15-17; type 10 with type 11; type 13 with types 14 and 17; type 14 with type 17; and type 15 with type 16. Type 18 may be combined with any of the types 1-17.

In the general formula I, m(i) and n(i) should assume values so that the weight average molecular weight ($M_w$) of the polymer chain is at least 1000.

In the general formula II, m(i), n(i), and s(k) should assume values so that the weight average molecular weight ($M_w$) of the branched polymer is at least 1000.

In some cases within the scope of the invention all the monomers used for the polymerization reaction are difunctional with respect to the reactions involved, e.g. a mixture of compounds having two amines and compounds having two carboxylic acids, and, consequently, the product of the polymerization reaction is linear polymer chains (formula I). However, in other instances, which are also within the scope of the present invention, the monomers, or at least a minor amount of the monomers, are tri- or polyfunctional monomers with respect to the reactions involved. Examples of such polyfunctional monomers with respect to the reaction between an amine and an epoxy group-compound are compounds having two primary amines (tetrafunctional) and compounds having a primary and a secondary amine (trifunctional). In these instances it is possible, and also the case if steric hinderance is not too predominant, that these tri- or polyfunctional monomers react with more than two monomers having the corresponding type of functional group, e.g. a compound having a secondary and a primary amine may react with three epoxy group-containing compounds resulting in a branched polymer (formula II). Other examples are amide bond-forming reactions, in which reactions primary as well as secondary amines are monofunctional, and therefore, the introduction of branching points can advantageous be performed, e.g., by introduction of triamines and/or tricarboxylic acids. Such branching is often desired in that advantageous properties are added to the polymer and thereby also to the binder system. Examples of triamines are diethylene triamine, Jeffamine® D-403 (triamino-polyoxypropylene glycols of average molecular weight 400 from Huntsman Chem. Corp., USA), and melamine. Examples of tricarboxylic acids are benzene tricarboxylic acids such as trimellitic acid, trimesic acid, trimerized fatty acids, such as Pripol® 1009 trimer acid from Unichema Chemicals, and 1,3,5-cyclohexane tricarboxylic acid.

The monomers used in producing a polymer as described in formula (II) should be chosen in such a way that the ratio between complementary functional groups, i.e. functional groups that react together during the polymerization reaction, is such that content of structures resulting in branching of the polymer chain, for example of the type represented by segment sets (c), examples of which are trifunctional monomers, is not sufficient for gelation to occur. This means that the average monomer functionality of the system is such that the gel point (for the definition of gel point, see G. Allen, J. C. Bevington (eds.),

*Comprehensive Polymer Science,* Vol. 5, p 117, Pergamon Press Oxford 1989 and P. J. Flory, *Principles of Polymer Chemistry,* Cornell University Press, Ithaca 1959), as indicated for example by an disproportional increase in viscosity, is not reached at the level of the desired final conversion.

In the present context, the term "alkyl group" is intended to mean saturated hydrocarbon groups with 1-22 carbon atoms which may be straight or branched or cyclic or combinations thereof such as methyl, ethyl, propyl, isopropyl, 2,2-dimethylpropyl, butyl, isobutyl, sec-butyl, tert-butyl, hexyl, octyl, dodecyl, cyclopentyl, cyclohexyl, etc.

In the present context, the term "cycloalkyl" is intended to mean the cyclic groups of the groups defined above for "alkyl group". Examples of such cycloalkyl groups are cyclopentyl, cyclohexyl, decalinyl, etc.

In the present context, the term "alkyl which optionally may be substituted" is intended to mean a $C_{1-22}$-alkyl group which is unsubstituted or is substituted with one or more, preferably 1-3, groups selected from groups used conventionally within paint technology for modifying the properties of binder polymers, for example groups selected from carboxy; protected carboxy such as a carboxy ester, e.g. $C_{1-22}$-alkoxycarbonyl; aminocarbonyl; mono- and di ($C_{1-22}$-alkyl)aminocarbonyl; amino-$C_{1-22}$-alkylaminocarbonyl; mono- and di($C_{1-22}$-alkyl) amino-$C_{1-22}$-alkylaminocarbonyl; amino; mono- and di($C_{1-22}$-alkyl)amino; $C_{1-22}$-alkylcarbonylamino; hydroxy; protected hydroxy such as acyloxy,

e.g. $C_{1-22}$-alkanoyloxy; alkoxy such as methoxy, ethoxy, propoxy, and butoxy; polyalkyleneoxy such as ethoxyethyleneoxy; alkenoxy such as vinyloxy and allyloxy; polyalkenylenoxy; sulphono; $C_{1-22}$-alkylsulphonyloxy; nitro; phenyl; cyano; halogen, e.g. fluorine, chlorine, bromine or iodine.

Examples of such substituted $C_{1-22}$-alkyl groups are carboxy-$C_{1-22}$-alkyl (e.g. carboxymethyl and carboxyethyl), protected carboxy-$C_{1-22}$-alkyl such as esterified carboxy-$C_{1-22}$-alkyl, e.g. $C_{1-22}$-alkoxycarbonyl-$C_{1-22}$-alkyl (e.g. methoxycarbonylmethyl, ethoxycarbonylmethyl, and methoxycarbonylethyl), aminocarbonyl-$C_{1-22}$-alkyl (e.g. aminocarbonylethyl, aminocarbonylethyl, and aminocarbonylpropyl), $C_{1-22}$-alkylaminocarbonyl-$C_{1-22}$-alkyl (e.g. methylaminocarbonylmethyl and ethylaminocarbonylmethyl), amino-$C_{1-22}$-alkyl-aminocarbonyl-$C_{1-22}$-alkyl (e.g. aminomethylaminocarbonylmethyl and aminoethylaminocarbonylmethyl), mono- or di($C_{1-22}$-alkyl)amino-$C_{1-22}$-alkylaminocarbonyl-$C_{1-22}$-alkyl (e.g. dimethylaminomethylaminocarbonylmethyl and dimethylaminoethylaminocarbonylmethyl), mono- or di($C_{1-22}$-alkyl) amino-$C_{1-22}$-alkyl (e.g. dimethylaminomethyl and dimethylaminoethyl), hydroxy-$C_{1-22}$-alkyl (e.g. hydroxymethyl and hydroxyethyl), protected hydroxy-$C_{1-22}$-alkyl such as acyloxy-$C_{1-22}$-alkyl, e.g. $C_{1-22}$-alkanoyloxy-$C_{1-22}$-alkyl (e.g. acetyloxyethyl, acetyloxypropyl, acetyloxybutyl, acetyloxypentyl, propionyloxymethyl, butyryloxymethyl, and hexanoyloxymethyl).

In the present context, the term "alkenyl" is intended to mean mono- or polyunsaturated hydrocarbon groups with 2-22 carbon atoms which may be straight or branched or cyclic or combinations thereof in which the double bond (s) may be present anywhere in the chain or the ring, for example vinyl, 1-propenyl, 2-propenyl, hexenyl, decenyl, 1,3-heptadienyl, cyclohexenyl etc. Some of the substituents exist both in a cis and a trans configuration. The scope of this invention comprises both cis and trans forms.

In the expression "alkenyl which may optionally be substituted" and also where applicable elsewhere, the term "optionally substituted" is intended to mean that the moiety may be substituted one or more times, preferably 1-3 times, with one of the groups defined above in connection with "alkyl which may be optionally substituted".

In the present context, the term "aryl" is intended to mean phenyl, biphenyl, naphthyl, anthracenyl, etc..

In the present context, the term "optionally substituted aryl" is intended to mean aryl as defined above which may be substituted with one or more, preferably 1-3, substituents selected from hydroxy; $C_{1-22}$-alkyl; $C_{2-22}$-alkenyl; $C_{2-22}$-alkynyl; $C_{1-22}$-alkoxy; heterocyclyl; aryl; aryloxy; halogen; nitro; nitroso; cyano; amino; mono($C_{1-22}$-alkyl)amino; di($C_{1-22}$-alkyl)amino; $C_{1-22}$-alkylcarbonylamino; aminocarbonyl; $C_{1-22}$-alkylaminocarbonyl; di($C_{1-22}$-alkyl)aminocarbonyl; $C_{1-22}$-acyl; $C_{1-22}$-acyloxy; $C_{1-22}$-acyl-$C_{1-22}$-alkyl; carboxy; $C_{1-22}$-alkoxycarbonyl; thiolo; $C_{1-22}$-alkylthio; arylthio; $C_{1-22}$-alkylsulphonyl; arylsulphonyl; $C_{1-22}$-alkylaminosulphonyl ; di($C_{1-22}$-alkyl)aminosulphonyl; sulphono ($SO_3H$); sulphino ($SO_2H$); halosulphonyl; isocyano; isothiocyano; thiocyano.

In the present context, the term "optionally substituted heterocyclyl" is intended to mean a 5- or 6-membered monocyclic or a 11- or 12-membered bicyclic, aromatic or partially or fully hydrogenated, heterocyclic group containing one or more, preferably 1-3, heteroatoms selected from oxygen, nitrogen and sulphur which, said ring or ring system optionally being substituted with one or more substituents selected from hydroxy; $C_{1-22}$-alkyl; $C_{2-22}$-alkenyl; $C_{2-22}$-alkynyl; $C_{1-22}$-alkoxy; heterocyclyl; aryl; aryloxy; halogen; nitro; nitroso; cyano; amino; mono($C_{1-22}$-alkyl)amino; di ($C_{1-22}$-alkyl)amino; $C_{1-22}$-alkylcarbonylamino; aminocarbonyl; $C_{1-22}$-alkylaminocarbonyl; di($C_{1-22}$-alkyl) aminocarbonyl; $C_{1-22}$-acyl; $C_{1-22}$-acyloxy; $C_{1-22}$-acyl-$C_{1-22}$-alkyl; carboxy; $C_{1-22}$-alkoxycarbonyl; thiolo; $C_{1-22}$-alkylthio; arylthio; $C_{1-22}$-alkylsulphonyl; arylsulphonyl; $C_{1-22}$-alkylaminosulphonyl; di($C_{1-22}$-alkyl)aminosulphonyl; sulphono ($SO_3H$); sulphino ($SO_2H$); halosulphonyl; isocyano; isothiocyano; thiocyano.

Examples of the heterocyclyl groups are pyrrolyl, furanyl, 2,3-dihydrofuranyl, tetrahydrofuranyl, thienyl, 2,3-dihydrothienyl, tetrahydrothienyl, imidazolyl, oxazolyl, thiazolyl, pyrazolyl, 3-pyrrolinyl, pyrrolidinyl, pyridinyl, piperidinyl, pyrimidinyl, purinyl, quinolinyl, 1,2-dihydroquinolinyl, isoquinolinyl, indolyl, piperazinyl, pyrazinyl, dioxolanyl, dioxanyl, 1,3,5-trioxanyl, tetrahydrothiapyranyl, dithiolanyl, pyrazolidinyl, iminazolidinyl, pyridazinyl, *sym*-triazinyl, *sym*-tetrazinyl, quinazolinyl, 1,5-naphtyridinyl, pteridinyl, isoindolyl, 2,3,2',3'-pyrrolopyrrolyl, 1,2,4-triazolyl, 1,2,3-triazolyl, tetrazolyl, benzimidazolyl, indazolyl, benzofuranyl, isobenzofuranyl, benzothiophenyl, thienothiophenyl, isoxazolyl, 1,2,5-oxadiazolyl, isothiazolyl, 1,3,4-thiadiazolyl, benzoxazolyl, benzothiazolyl. etc..

In the present context, the terms "alkylene", "alkenylene" are intended to mean biradicals of straight, branched and/or cyclic $C_{1-44}$-alkanes or $C_{2-44}$-alkenes, respectively. The terms "arylene" and "heterocyclylene" are intended to mean biradicals corresponding to groups comprised by the terms "aryl" and "optionally substituted aryl", and "heterocyclyl", respectively, as defined above.

Examples of alkylenes are methylene; any of the possible biradicals of ethane, propane, butane, isobutane, pentane, isopentane, neopentane (such as 2,2-dimethylpropylene), isomers of hexane, isomers of octane, isomers of nonane (such as 2,2,4-trimethylhexylene and 2,4,4-trimethylhexylene), isomers of dodecane, cyclopentane (including cis and trans forms of 1,2- and 1,3-biradicals), cyclohexane (including cis and trans forms of 1,2-, 1,3- and 1,4-biradicals); as well as the alkylene functions present in saturated forms of dimeric fatty acids as defined below; etc.

Examples of alkenylenes are any of the possible biradicals of ethene, propene, hexene, decene, 1,3-heptadiene, cyclohexene; as well as the alkenylene functions present in dimeric fatty acids as defined below; etc.

Examples of arylenes, alkylarylenes, alkylarylalkylenes, and arylalkylarylenes are isomers of phenylene such

as 1,2-phenylene, 1,3-phenylene, and 1,4-phenylene; isomers of biphenylene such as 4,4'-biphenylene, 3,3'-biphenylene, and 3,4'-biphenylene; isomers of naphtylenes; isomers of anthracenylene; isomers of benzylene; isomers of xylylene; isomers of diphenylenealkanes such as 2,2-diphenylene-propane; and substituted analogues thereof.

Examples of heterocyclylenes are any of the above listed heterocyclyl groups with a further free valency, as well as substituted analogues thereof.

In the present context, the term "cycloalkyl triradical" is intended to mean the cyclic alkylene groups defined above having a further free valency, as well as substituted analogues thereof. Examples of cycloalkyl triradicals are triradicals of cycloalkanes such as cyclohexa-1,3,5-triyl and substituted analogues thereof.

In the present context, the terms "aryl triradical" and "heterocyclyl triradicals" are intended to mean the groups defined for arylene and heterocyclylene, respectively, having a further free valency, as well as substituted analogues thereof. Examples of aryl triradicals are triradicals of benzene or substituted analogues thereof such as 1,2,3-benzenetriyl, 1,2,4-benzenetriyl, and 1,3,5-benzenetriyl, triradicals of naphthalene such as naphtha-2,3,5-triyl, naphtha-2,3,7-triyl, and naphtha-1,2,4-triyl. Examples of heterocyclyl triradicals are pyridine-2,4,6-triyl, s-triazine-2,4,6-triyl, triradicals of 2,4,6-triaminopyrimidine, and triradicals of 1,3,5-s-triazine-2,4,6(1H,3H,5H)-trione.

In the general formulae I and II, with respect to the meaning of $R^1{}_i$, cf. Formula III, in the polymer chains A and B, respectively, it is also preferred that $R_x$, $R_y$, $R_z$ and $R_v$ independently are selected from ethylene ($-CH_2-CH_2-$) and isopropylene ($-CH(CH_3)-CH_2-$) .

Preferred paint compositions of the invention are those comprising a binder component of formula I or formula II wherein $D^1{}_i$, $D^2{}_j$, $D^3$, $D^4{}_k$, and $D^5{}_k$ independently are selected from $-N(R_0)-CH_2-CH(OH)-CH_2-O-$, $-O-CH_2-CH(OH)-CH_2-N(R_0)-$, -C(O)-O-, -O-C(O)-, $-N(R_0)-C(O)-$, $-C(O)-N(R_0)-$, $-N(R_0)-$ and -O-, more preferably selected from -C(O)-O-, -O-C(O)-,$-N(R_0)-C(O)-$, $-C(O)-N(R_0)-$, $-N(R_0)-$ and -O-, in particular selected from $-C(O)-N(R_0)-$, $-N(R_0)-C(O)-$, and $-N(R_0)-$.

$D^4$ and $D^5$ may also independently be a single bond.

It is furthermore preferred that $R_0$ is hydrogen, methyl, ethyl or phenyl, in particular hydrogen or methyl, most preferably hydrogen.

With respect to the group $R^2{}_j$, it is preferred that it is selected from alkylene, alkenylene or arylene, which may optionally be substituted.

In preferred embodiments of the present invention the groups $R^3{}_k$, $R^4{}_k$, and $R^5{}_k$ are independently selected from the group of the formula (III) defined for $R^1{}_j$, alkylene, alkenylene, arylene, alkylarylene, and alkylarylalkylene, in particular from the group of the formula (III), alkylene, and arylene, most preferred from the group of the formula (III) and alkylene.

With respect to the group $E_k$, it is preferably selected from optionally substituted methine (>CH-) such as methylmethine, ethylmethine, hydroxymethine, methoxymethine, and phenylmethine; >N-; optionally substituted triradicals of benzene such as 1,2,3-benzenetriyl, 1,2,4-benzenetriyl, and 1,3,5-benzenetriyl; optionally substituted triradicals of naphthalene such as naphtha-2,3,5-triyl, naphtha-2,3,7-triyl, and naphtha-1,2,4-triyl; and optionally substituted triradicals of heterocyclic compounds such as pyridine-2,4,6-triyl, s-triazine-2,4,6-triyl, triradicals of 2,4,6-triaminopyrimidine, and triradicals of 1,3,5-s-triazine-2,4,6(1H,3H,5H)-trione. In especially preferred embodiments the group E is selected from optionally substituted methine (>CH-), >N-, and optionally substituted triradicals of benzene.

With respect to the parameters in the formulae I and II, the sum of the parameters m(i) in the segment sets under a) is preferably at the most 50, such as 30, the sum of the parameters n(j) in the segment sets under b) is preferably at the most 50, such as 30, and, where applicable, the sum of the parameters s(k) in the segment sets under c) is preferably at the most 30, such as 20.

The end groups X and Y in the polymers of formula I and II are preferably independently hydrogen, methyl, ethyl or phenyl which may be optionally substituted, in particular hydrogen.

In a preferred embodiment of the paint composition of the invention, the polymer chain A consists of

a) from 1 to 3 segment sets

$$-[R^1{}_i-D^1{}_i]_{m(i)}-$$

and

b) from 1 to 5 segment sets

$$[R^2{}_j-D^2{}_j]_{n(j)}-$$

wherein $R^1_i$, $R^2_j$, $D^1_i$, $D^2_j$, m(i) and n(j) are as defined above.

In another preferred embodiment of the paint composition of the invention, the polymer B consists of

a) from 0 to 3 segment sets

$$[R^1{}_i\text{-}D^1{}_i]_{m(i)}\text{-},$$

b) from 0 to 5 segment sets

$$\text{-}[R^2{}_j\text{-}D^2{}_j]_{n(j)}\text{-},$$

and

c) 1 segment set

$$\begin{array}{c}\text{-}[R^3{}_k\text{-}E_k\text{-}R^4{}_k\text{-}D^4{}_k]_{s(k)}\text{-}\\ |\\ [R^5{}_k\text{-}D^5{}_k]\text{-}\end{array}$$

wherein $R^1_i$, $R^2_j$, $R^3_k$, $R^4_k$, $R^5_k$, $D^1_i$, $D^2_j$, $D^4_k$, $D^5_k$, $E_k$, m(i), n(j), s(k) are as defined above,

with the proviso that at least one of the segment sets defined in a) and b) is present in the polymer.

The paint composition has a total pigment content of in the range of 10-60%, preferably 15-50%, in particular 25-50% such as 20-40%, of the solids volume of the paint composition. Furthermore, it is preferred that the sea water-soluble pigment or pigments constitute at least 10%, preferably at least 20%, in particular at least 30%, of the solids volume of the paint composition. Similarly, any sea water-insoluble pigments in the paint composition, when present, preferably constitute at the most 40%, preferably at the most 30%, in particular at the most 20% of the solids volume of the paint composition.

In a preferred embodiment, the binder system constitute 4-70%, preferably 7-65%, in particular 10-55%, such as 20-50%, of the solids volume of the paint composition.

In another preferred embodiment, the compound of formula I or II constitute 20-100%, preferably 40-100% such as 40-90%, in particular 60-100% such as 60-90% of the solids volume of the binder system.

Polymers of the formula I or II may be prepared by methods known *per se* from the preparation of polymers containing the same types of elements, i.e. according to whether the polymers contain for example ester, amide, amine, ether, thioether, urethane, epoxy, thioester, carbonate, azomethine, or urea elements or combinations thereof as links connecting the other parts of the monomer sections.

In the following, general guidelines for preparing such types of polymers are given. Literature regarding the following polymers/polymerization techniques can be found in

[1] R. R. Myers, J. S. Long (eds.), *Treatise on Coatings,* vol. 1 - 3, Marcel Dekker, New York 1967
[2] S. R. Sandler, W. Karo, *Polymer Syntheses,* vol. 1 - 3, Academic Press, Orlando 1974
[3] G. Allen, J. C. Bevington (eds.), *Comprehensive Polymer Science,* vol. 1 - 7, Pergamon Press, Oxford 1989

**Polyesters**

Lit.: [1] vol.1, p. 391
[2] vol. 1, p. 55; vol. 2, p. 140
[3] vol. 5, p. 275

In a typical procedure, a reactor vessel, equipped with a nitrogen sparge, a distillation column and a condenser,

is charged under nitrogen with a suitable diol or diol mixture and a suitable diacid or diacid mixture or reactive acid derivatives thereof, such as esters or anhydrides or mixtures thereof, in a diol/diacid molar ratio from 0.89 to 1.16. Suitable diols include ethylene glycol, propylene glycol, pentaerythritol, neo-pentyl glycol, propanediol, butanediol and dihydroxy-functional prepolymers. Diacids include adipic acid, maleic acid, fumaric acid, phthalic acid, isopthalic acid, terephthalic acid, and cyclohexane dicarboxylic acid, as well as dimerized fatty acid. Diesters include diethyl phthalate and diethyl maleate. Anhydrides include maleic anhydride and phthalic anhydride. The mixture is heated to approx. 160-260°C while the temperature is being monitored and the heating rate adjusted to the reaction rate. Water or other products liberated during reaction (e.g. alcohols) are being distilled off, employing a column to separate them from volatile monomers. The reaction is kept at this temperature for 4-24 h. The reaction is checked for completion, e.g. by measuring the acid number, and stopped at the desired degree of reaction. The mixture is cooled to approx. 100-140°C and diluted in a suitable solvent. Catalysts may optionally be used. Such catalysts include sulphuric acid, toluene sulphonic acid, phosphoric acid, and zinc chloride at concentrations of 0.01-5 mole%.

Alternatively, a solvent may be used. Suitable solvents include xylene, toluene, and alcohols. Suitable alcohols include 1-butanol. The reactor is charged as above including the solvent and heated to the reflux of the respective solvent. Water or other products liberated during reaction (e.g. alcohols) are being distilled off, employing a column to separate them from volatile monomers. After a degree of conversion of 50-70 % is reached, as indicated e.g. by the acid number of the mixture, the temperature is raised to 200-240°C, water and solvent is distilled off. The reaction is checked for completion, e.g. by measuring the acid number, and stopped at the desired degree of reaction. The mixture is cooled to approx. 100-140°C, diluted in a suitable solvent. Catalysts may optionally be used. Such catalysts include sulphuric acid, toluene sulphonic acid, phosphoric acid, and zinc chloride at concentrations of 0.01-5 mol-%.

The dimerized fatty acid mentioned above as an example of a diacid is sometimes referred to as "dimer fatty acid" or polymer fatty acids. They are a complex mixture resulting from the polymerization of fatty acids. Representative fatty acids are those commercially available from the polymerization of tall oil fatty acids. These polymeric fatty acids have a composition typically comprising 0-10 % w/w $C_{18}$-monobasic acids (monomer), 60-95 % w/w $C_{36}$-dibasic acid (dimer), and 1-35 % w/w $C_{54}$- and higher polybasic acids (trimer and higher). The relative ratios of monomer, dimer and trimer in unfractionated polymer fatty acids are dependent on the nature of the starting material and the conditions of the polymerization. Methods for the polymerization of fatty acids are described, for eample, in US Pat. No. 3,157,681.

**Polyamides**

Lit.: [1] vol. 3, p. 253
[2] vol. 1, p. 89
[3] vol. 5, p. 357 and p. 375

A reactor vessel, equipped with a nitrogen sparge, a distillation column and a condenser, is charged under nitrogen with a diamine or diamine mixture and a diacid or a diacid mixture or reactive acid derivatives thereof, such as esters or anhydrides, or mixtures thereof in a diamine/diacid molar ratio from 0.89 to 1.16. Suitable diamines include ethylenediamine, hexamethylene diamine, 2,2,4- and 2,4,4-trimethyl hexamethylene diamine, isophorone diamine; as well as the Jeffamines®, which are aminated polyalkoxyethers (registered trade mark of Huntsman Chem. Corp., USA). Suitable diacids include adipic acid, maleic acid, fumaric acid, phthalic acid, isopthalic acid, terephthalic acid, and cyclohexane dicarboxylic acid, as well as dimerized fatty acid. Diesters include diethyl phthalate and diethyl maleate. Anhydrides include maleic anhydride and phthalic anhydride. The mixture is heated to approx. 180-260°C while the temperature is being monitored and the heating rate adjusted to the reaction rate. Water or other products liberated during reaction (e.g. alcohols) are distilled off, employing a column to separate them from volatile monomers. The reaction is kept at this temperature for 8-24 h. The reaction is checked for completion, e.g. by measuring the acid number, and stopped at the desired degree of reaction. The mixture is cooled to approx. 100-140°C, diluted with a suitable solvent. Catalysts may be used optionally. Suitable catalysts include sulphuric acid, toluene sulphonic acid, phosphoric acid, and zinc chloride at concentrations of 0.01-5 mol-%.

Alternatively, a solvent may me used. Possible solvents include xylene, toluene, and alcohols, e.g. butanol. The reactor is charged as above including the solvent and heated to the reflux of the respective solvent. Water or other liberated reaction products (alcohols) are distilled off, employing a column to separate them from volatile monomers. After a conversion of 50-70 % is reached, as indicated e.g. by the acid number of the mixture, the temperature is raised to 200-260°C, and water and solvent are distilled off. The reaction is checked for completion, e.g. by measuring the acid number, and stopped at the desired degree of reaction. The mixture is cooled to approx. 100-140°C and diluted in a suitable solvent. Catalysts may optionally be used. Such catalysts include sulphuric acid, toluene sulphonic acid, phosphoric acid, and zinc chloride at concentrations of 0.01-5 mol-%.

In an embodiment of the present invention, the conditions for preparing non-branched polyamides are as follows: the amines:acids ratio is around 0.8-1.2, preferably 0.95-1.05, such as 0.96-1.03. Typically, the amines, preferably of the Jeffamine®-type, constitute 15-95 weight %, preferably 30-90%, in particular 50-80%, of the reaction mixture, whereas the acids, preferably dimer fatty acids, constitute up to 50 weight %, preferably 5-45 w/w %, in particular 15-40 w/w %, and xylene (3-35 weight %, preferably 5-25 w/w %, in particular 10-20 w/w %) and catalysts are used as balance. The polymerization is preferably performed at around 150-250°C, preferably 150-230°C, for 3-50 hours, preferably 4-20 hours. After vacuum stripping for 0-2 h the product has a acid number of 3-30 (on solids) and a amine number of 5-100 (on solids). For the final product the reaction mixture is preferably diluted in xylene/1-butanol 1:1-3:1 (w/w) to 20-90 weight % by solids, preferably 40-85 weight % by solids, in particular 60-80 weight % by solids.

Another preferred polymer is a polymer of the following composition (on solids) obtained in, e.g. a polymerization reaction as above. The polymerization reaction is performed on the following composition: Jeffamine® D-400 or D-2000 (0-50 weight %, such as 20-40 weight %), Jeffamine® ED-600 (20-50 weight %, such as 20-30 weight %), hydrophobic amines (0-60 weight %, such as 0-30 weight %), dimer fatty acids (5-25 weight %, such as 5-15 weight %), 1,4-cyclohexane dicarboxylic acid (5-45 weight %, such as 15-40 weight %), and other acids (0-30 weight %, such as 0-20 weight %).

In a further preferred embodiment, the polymer may be a poly(esteramide) consisting of a polymer chain having amide and ester segments, e.g. obtained by a polymerization reaction as described above by exchanging some of the diamines with dialcohols.

**Polyamines**

Lit.: [3] vol. 3, p. 837

Polyamines in the context of the present invention are to be understood as reaction products of polymerization reactions derived from monomers or prepolymers having an amino or polyamino functionality and, additionally, having a functionality suitable for use in a polymerization reaction, e.g. a polyesterification or a polyamidification as described above. Suitable monomers having an amino functionality and a functionality suitable for polymerization reactions include N-methyldiethanolamine, N-ethyldiethanolamine, triethanolamine, 3-(diethylamino)-1,2-propanediol, 1,4-bis-(3-aminopropyl)-piperazine, and commercial oligomers and polymers of ethyleneimine.

**Polyethers**

Lit.: [1] vol. 1, p. 391
[2] vol. 1, p. 154; vol. 3, p. 139
[3] vol. 3, p. 751

Polyethers in the context of the present invention are to be understood as reaction products of polymerization reactions derived from ether or polyether-containing monomers or prepolymers, having a functionality suitable for the use in a polymerization reaction, e.g. a polyesterification or a polyamidification as described above. Suitable monomers which have an ether grouping and a functionality reactive under polymerization reactions include commercial polyethylene oxide and polypropylene oxide derivatives having hydroxy, amino or carboxy end groups, 4,4'-dicarboxydiphenyl ether, and diglycolic acid.

**Polythioethers**

Lit.: [2] vol. 3, p. 69
[3] vol. 5, p. 533

Polythioethers (or polysulphides) in the context of the present invention are to be understood as reaction products of polymerization reactions derived from thioether or polythioether-containing monomers or prepolymers, having a functionality suitable for the use in a polymerization reaction, e.g. a polyesterification or a polyamidification as described above. Suitable monomers having such a thioether grouping and a functionality reactive in polymerization

reactions include 2,2'-thiodiethanol, mercaptoethyl sulphide, 4,4'-dicarboxydiphenyl sulphide, thiodiglycolic acid and commercial [poly(1-oxa-3-thia-hexane)] derivatives having hydroxy-functional end groups.

**Polyurethanes**

Lit.: [1] vol. 1, p. 435
[2] vol. 1, p. 196
[3] vol. 5, p. 413

In a typical procedure, a reactor vessel equipped with a nitrogen sparge and a condenser is charged under nitrogen with a dihydroxy or polyhydroxy-functional monomer and a suitable solvent. The solution is heated to temperatures between 60-120°C and a solution of a diisocyanate or a polyisocyanate in a suitable solvent is added over 1-4 h. The mixture is kept at this temperature for 1-6 h to complete the reaction.
Suitable diols and polyols include ethylene glycol, propylene glycol, pentaerythritol, neo-pentyl glycol, 1,4-butanediol, glycerol, commercial hydroxy-terminated polyester prepolymers, and commercial polyethylene oxide and polypropylene oxide derivatives having terminal hydroxy functionality. Suitable diisocyanates include 2,4-tolylene diisocyanate, 4,4'-diphenylmethane diisocyanate, hexamethylene diisocyanate. Suitable solvents include xylene, toluene, and methyl ethyl ketone. Catalysts include tertiary amines, examples of which are triethylamine, pyridine, and 1,4-diazabicyclo [2.2.2]octane,dibutyltin laurate, tributyltin acetate, and stannic chloride at concentrations in the range 0.0001-1 mol %. An hydroxy/isocyanate ratio of 0.9-1.1 is preferred in order to avoid excessive cross-linking.

**Epoxy resins**

Lit.: [1] vol. 1, p. 225
[2] vol. 2, p. 75
[3] vol. 5, p. 667
[4] B. Ellis (ed.), *Chemistry and Technology of Epoxy Resins,* Blackie Academic & Professional, London 1993

In the context of the present invention epoxy resins are to be understood as addition polymers derived from monomers or prepolymers, being di- or polyfunctional in an epoxy grouping, or condensation products thereof, and a compound being di- or polyfunctional in a grouping possessing active hydrogen, preferably amine derivatives.
In a typical procedure, a reactor vessel equipped with a nitrogen sparge and a condenser is charged under nitrogen with a monomer or monomer mixture having active hydrogen dissolved in a suitable solvent. The solution is heated to a temperature between 40-140°C, at which temperature an epoxy monomer or a mixture of epoxy monomers is added, preferably as a solution in a suitable solvent over a period of 1-8 h. The temperature is kept for another 1-4 h to complete the reaction, typically until a suitable viscosity level is reached. A ratio of epoxy functionality to active hydrogen functionality between 0.75 and 1.3 should be maintained in order to avoid excessive cross-linking.
Suitable solvents include aromatic hydrocarbons such as toluene, xylene, and ketones such as methylisobutyl ketone. Suitable monomers are monomers having an epoxy group including 4,4'-bis (glycidyloxy) bisphenol-A and commercial oligomers thereof, difunctional epoxy monomers being preferred. Suitable monomers possessing active hydrogen are preferably amines and polyamino compounds such as ethylene diamine, piperazine, trimethyl hexamethylene diamine, isophorone diamine, diethylene triamine, triethylene tetramine, tetraethylene pentamine, m-xylylene diamine, 3,3-aminobispropylamine, and polyamide and polyaminoamide derivatives sold commercially. Catalysts can optionally be used. Suitable catalysts include phosphoric acid, boron trifluoride-ethylamine complex, and tertiary amines such as triethylamine, alcohols, and phenols, e.g. 2,4,6-tris(dimethylaminomethyl)phenol, at levels between 0.01-1 mol %.

**Polythioesters**

Lit.: [2] vol. 3, p. 42

In a typical procedure, a reactor vessel equipped with a nitrogen sparge, a short distillation column, and a

condenser is charged under nitrogen with diester or a diester mixture and a catalyst dissolved in a suitable solvent. The mixture is heated slowly to approx. 60-140°C and a dithiol or dithiol mixture, preferably dissolved in a suitable solvent is added. The mixture is kept at this temperature for 0-2 h and the temperature is then raised slowly to 180-260°C. Products liberated during the reaction (alcohols) and solvent are distilled off, employing a column to separate them from volatile monomers while applying a reduced pressure of 0-200 mbar. The reaction is kept at these conditions for 1-4 h. The reaction is checked for completion, e.g. by measuring the acid number, and stopped at the desired degree of reaction. The mixture is cooled to approx. 80-140°C and diluted in a suitable solvent.

Diester/dithiol ratios vary from 0.9 to 1.1. Suitable diesters include diphenyl terephthalate, diphenyl isophthalate, diphenyl succinate, and diphenyl cyclohexane-1,4-dicarboxylate. Suitable dithiols include 1,4-tetramethylene dithiol, 1,6-hexamethylene dithiol, 1,4-cyclohexylene dithiol, and xylylene dimercaptane. Suitable catalysts include calcium hydride and lithium hydride suspensions in toluene. Suitable solvents include toluene and xylene.

**Polycarbonates**

Lit.: [1] vol. 3, p. 275
[2] vol. 1, p. 73
[3] vol. 5, p. 345

Polycarbonates in the context of the present invention are to be understood as reaction products of polymerization reactions derived from monomers or prepolymers having a carbonate or polycarbonate functionality and, additionally, having a functionality suitable for the use in a polymerization reaction, e.g. a polyesterification or a polyamidification as described above. Suitable monomers having an carbonate functionality and a functionality suitable for polymerization reactions include commercial oligomers or prepolymers derived from the condensation of a diol, preferably bisphenol A, and phosgene, having hydroxy-functional end groups.

**Polyazomethines**

Lit.: [5] P. W. Morgan, S. L. Kwolek, T.C. Pletcher, Macromolecules **20**, 729 (1987)
[6] P. W. Wojtkowski, Macromolecules **20**, 740 (1987)

A reactor vessel equipped with a nitrogen sparge, a short distillation column, and a condenser is charged under nitrogen with a primary diamine or diamine mixture, dissolved in a suitable solvent. At temperatures between ambient and 120°C, a dialdehyde or dialdehyde mixture, optionally dissolved in a suitable solvent, is added over a period of 0.5-2 h. The reaction mixture is stirred at this temperature over a period of 1-20 h. If a solvent suitable for azeotropic removal of the reaction water is used, such as toluene and xylene, water removal by azeotropic distillation is preferred.

Suitable ratios of dialdehyde to diamine are between 0.8-1.2. Suitable dialdehydes include glutaric dialdehyde, phthalaldehyde, terephthalaldehyde, and 2,6-naphthalene dicarboxaldehyde. Suitable primary diamines include ethylene diamine, trimethyl hexamethylene diamine, isophorone diamine, m-xylylene diamine, 3,3-aminobispropylamine, phenylene diamine, methyl-1,4-phenylene diamine, and bis(4-aminophenyl) ether. Suitable solvents include toluene, xylene, dimethylacetamide, N-methyl pyrrolidone, and methylene chloride.

**Polyureas**

Lit.: [2] vol. 1, p. 185
[3] vol. 5, p. 427

A reactor vessel equipped with a nitrogen sparge and a condenser is charged under nitrogen with a diamine or a polyamine dissolved in a suitable solvent. The solution is heated to temperatures between 60-120°C and a solution of a diisocyanate or a polyisocyanate dissolved in a suitable solvent is added over a period of 1-4 h. The mixture is kept at this temperature for 1-4 h to complete the reaction.

Suitable diamines and polyamines include the amines listed in connection with the preparation of epoxy resins.

Suitable diisocyanates and polyisocyanates include 2,4-tolylene diisocyanate, 4,4'-diphenylmethane diisocyanate, and hexamethylene diisocyanate. Suitable solvents include xylene, toluene, and methyl ethyl ketone. Catalysts include tertiary amines, examples of which are triethylamine, pyridine, and 1,4-diaza-bicyclo [2.2.2]octane,dibutyltin laurate, tributyltin acetate, and stannic chloride at concentrations between 0.0001-1 mol %. An amine/isocyanate ratio of 0.9-1.1 is preferred in order to avoid excessive cross-linking.

According to the present invention the binder system comprises at least one polymer of the formula I or a polymer of the formula II, but may also comprise both a polymer of the formula I and a polymer of the formula II. Furthermore, it is realistic and often also highly desirable to incorporate, in the binder system, additional binder components, which are not comprised within the scope of formula I or II herein, and which may further facilitate film-formation and sprayability as well as erodibility.

Examples of such additional binder components, which may or may not be erodibility conferring, are: rosin and rosin derivatives such as natural gum rosin, and natural and synthetic gum rosin derivatives, including zinc calcium rosinate, limed rosin, dimerized rosin and rosin ester; natural oils and derivatives thereof such as linseed oil, castor oil, and soy bean oil; saturated polyester resins; vinyl resins such as polyvinylacetate, polyvinylbutyrate, polyvinylchloride-acetate, copolymers of vinyl acetate and vinyl isobutyl ether, vinylchloride, copolymers of vinyl chloride and vinyl isobutyl ether, polyvinyl methyl ether, polyvinyl isobutyl ether, and polyvinyl ethyl ether; alkyd resins or modified alkyd resins; hydrocarbon resins such as petroleum fraction condensates; chlorinated polyolefins such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerised tall oil fatty acids; cyclised rubbers; epoxy esters; epoxy urethanes; polyurethanes; epoxy polymers; hydroxy-polyether resins; polyamine resins; silicone resins and silicone modified resins; etc., as well as co-polymers thereof.

In a preferred embodiment of the present invention the additional binder component(s) constitute(s) 0-80%, preferably 0-60% such as 10-60%, in particular 0-40% such as 10-40% of the solids volume of the binder system.

In the present context the term "antifouling agent" is intended to mean any chemical compound or mixture of chemical compounds which has the capability of suppressing the settlement of marine organisms, to any substrate containing the antifouling agent. The suppression can be executed by any mechanism lethal to the organisms, by any mechanism resulting in deterrence and/or repellence of the organisms with or without causing mortality or by any mechanism inhibiting the settlement of the organisms with or without causing mortality. A number of the antifouling agents applicable within the scope of the present invention may be considered as water-soluble pigments.

Typical examples of antifouling agents are:

organometals such as organocopper compounds e.g. copper naphtenate, copper octoate, and copper rosinate; zinc pyridinethione; metallo-dithiocarbamates such as bis(dimethyldithiocarbamato)zinc, methylene-bis (dithiocarbamato)zinc, ethylene-bis (dithiocarbamato)zinc, ethylene-bis (dithiocarbamato)copper, and ethylene-bis(dithiocarbamato)manganese; bis(1-hydroxy-2(1H)-pyridinethionato)-O,S copper; copper acrylate; zinc-2-pyridinethio-N-oxide; phenyl(bispyridyl)-bismuth dichloride;

metal biocides such as copper, copper metal alloys such as copper-nickel alloys; metal oxides such as cuprous oxide and cupric oxide; metal salts such as cuprous thiocyanate, barium metaborate, and copper sulphide;

heterocyclic nitrogen compounds such as 3a,4,7,7a-tetrahydro-2-((trichloromethyl)thio)-1H-isoindole-1,3(2H)-dione (captan), pyridine-triphenylborane, 1-(2,4,6-trichlorophenyl)-1H-pyrrole-2,5-dione, 2,3,5,6-tetrachloro-4-(methylsulphonyl)-pyridine, 2-methylthio-4-tert-butylamino-6-cyclopropylamino-s-triazine, and quinoline derivatives;

heterocyclic sulphur compounds such as 2-(4-thiazolyl)-benzimidazole, substituted isothiazolones (such as 4,5-dichloro-2-octyl-3(2H)-isothiazolone), 1,2-benzisothiazolin-3-one, 4,5-dichloro-2-octyl-3(2H)-isothiazoline, 2-(N,N-dimethylthiocarbamoylthio)-5-nitrothiazole, 1,2-benzisothiazolin-3-one, and 2-(thiocyanatomethylthio)-benzothiazole;

urea derivatives such as methylene-bis(thiourea), N-(1,3-bis(hydroxymethyl)-2,5-dioxo-4-imidazolidinyl)-N,N'-bis (hydroxymethyl)urea, and N'-(3,4-dichlorophenyl)-N,N-dimethyl urea;

amides or imides of carboxylic acids, sulphonic acids and of sulphenic acids such as 1,1-dichloro-N-((dimethylamino) sulphonyl)-1-fluoro-N-(4-methylphenyl)-methanesulphenamide, 2,2-dibromo-3-nitrilo-propionamide, N-methylol formamide, N-(dichlorofluoromethylthio)-phthalimide, and N,N-dimethyl-N'-phenyl-N'-(dichlorofluoromethylthio)sulphamide;

salts or esters of carboxylic acids such as 2-((3-iodo-2-propynyl)oxy)-ethanol phenylcarbamate and N,N-didecyl-N-methyl-poly (oxyethyl)ammoniumpropionate;

amines such as dehydroabiethylamines and cocodimethylamine;

substituted methane such as di(2-hydroxy-ethoxy)methane, 5,5'-dichloro-2,2'-dihydroxydiphenylmethane, and methylene-bisthiocyanate;

substituted benzene such as 2,4,5,6-tetrachloro-1,3-benzenedicarbonitrile, n-butyl-catechol, 1,1-dichloro-N-((dimethylamino)-sulphonyl)-1-fluoro-N-phenylmethanesulphenamide, and 1-((diiodomethyl)sulphonyl)-4-methylbenzene;

tetraalkyl phosphonium halogenides such as tri-n-butyltetradecyl phosphonium chloride;

guanidine derivatives such as n-dodecylguanidine hydrochloride;

disulphides such as bis-(dimethylthiocarbamoyl)-disulphide and tetramethylthiuramdisulphide;

and mixtures thereof.

The content of the antifouling agent(s) in the antifouling paint composition is preferably in the range of 2-50%, such as 5-50% solids volume.

Apart from the binder system, which comprises at least one polymer of the formula I or II, the antifouling agent (s), and the pigment(s), the antifouling paint composition according to the invention may further comprise any of the other commonly used formulating materials within the paint technology. Such materials or components may include fillers, colouring materials, auxiliary agents and, optionally, carriers depending on whether the paint composition is to be formulated as a liquid paint or is to be formulated as a paint in powder form.

The pigment(s) may for example be selected from grades of titanium dioxide, red iron oxide, zinc oxide, carbon black, graphite, yellow iron oxide, phthalocyanine blue, and phthalocyanine green. Such materials are characterized in that they render the final paint coating non-transparent and non-translucent. The pigments may further be selected from pigment-like ingredients such as fillers selected from calcium carbonate, dolomite, talc, mica, barium sulphate, kaolin, and quartz flour. These materials are characterized in that they do not render the paint non-translucent and therefore do not contribute significantly to hide any material below the coating of the paint composition of the invention. The pigments and pigment-like ingredients may be characterized with regard to their water solubility. Thus, pigments, e.g. carbon black and iron oxide, which are sparingly soluble in sea water, i.e. soluble to an extent of less than 1 mg/litre at 25°C, are regarded as sea water-insoluble, whereas pigments, e.g. zinc oxide, which are soluble in sea water to an extent of at least 1 mg/litre at 25°C are regarded as sea water-soluble.

Auxiliary agents may be any of those that are commonly used within paint technology. Examples of such auxiliary agents are:

plasticizers such as chlorinated paraffin; low molecular weight polybutene; phthalates such as dibutyl phthalate, benzyl butyl phthalate, dioctyl phthalate, and diisodecyl phthalate; phosphate esters such as tricresyl phosphate, and 2-ethylhexyl diphenyl phosphate; sulphonamides such as alkyl-p-toluene sulphonamide; and polymeric acrylic plasticizers;

surfactants such as derivatives of propylene oxide or ethylene oxide such as alkylphenol-ethylene oxide condensates; and soya lecithin;

defoaming agents such as silicone oils;

catalysts such as dryers, e.g. metal octoates and metal naphthenates;

stabilizers such as stabilizers against light and heat, e.g. 2-hydroxy-4-methoxybenzophenone, 2-(5-chloro-(2H)-benzotriazol-2-yl)-4-methyl-6-(tert-butyl)phenol, 2,4-ditert-butyl-6-(5-chlorobenzotriazol-2-yl)phenol; stabilizers against moisture such as molecular sieves; and stabilizers against oxidation such as 2,5-di-tert-butyl-hydroquinone;

inhibitors such as polymerization inhibitors, e.g. parabenzoquinone, hydroquinone, and methyl-hydroquinone; coalescing agents such as glycols; and thickeners and anti-settling agents such as colloidal silica, aluminium stearate, hydrogenated castor oil, polyethylene fibres, and organo-modified clays.

When preparing a liquid paint composition, a carrier may be any suitable medium in which the components of the antifouling paint composition are dissolved or dispersed. Such media are usually based on organic solvent or water. The role of the medium is to permit easy application of the antifouling paint composition, to evaporate after application and leave a dry film. Thus, it may be media in which the various polymers in the paint composition may be dissolved, but it may also be a medium in which the polymer is dispersed such as when forming a dispersion or latex paint.

Examples of liquid carriers include water; alcohols, such as methanol, ethanol, propanol, isopropanol, butanol, isobutanol, or benzyl alcohol; alcohol/water mixtures such as ethanol/water mixtures; aliphatic and aromatic hydrocarbons, such as white spirit, toluene, xylene, or naphtha solvent; ketones, such as methyl ethyl ketone, acetone, methyl isobutyl ketone, methyl isoamyl ketone, diacetone alcohol, or cyclohexanone; ether alcohols, such as 2-butoxyethanol, propylene glycol monomethyl ether, or butyl diglycol; esters, such as methoxypropyl acetate, n-butyl acetate, or 2-ethoxyethyl acetate; chlorinated hydrocarbons, such as methylene chloride or trichloroethylene; and mixtures thereof, as well as any other carriers usually employed within the coating industry.

The antifouling paint composition may be prepared by any suitable technique that is commonly used within the field of paint production. Thus, the various components may be mixed together using a high speed disperser, a ball mill, a pearl mill, a three-roll mill etc.

The antifouling paint composition according to the invention may be applied to the marine structure to be protected by means of any of the usual techniques used within the paint field such as by means of a brush, a roller, a pad, by dipping, by spraying etc. The exact technique chosen depends upon the object to be protected and also upon the particular composition (such as its viscosity etc.) and upon the particular situation such as whether the object is in the water or is out of the water. Preferred applications techniques are spraying and by means of a brush or a roller.

The paint composition according to the invention may be applied to a variety of marine surfaces or solid objects that come into contact with sea water and is especially applicable to the hulls of ships and boats, and to pipes.

Prior to the application of a paint composition of the invention to a marine structure, the marine structure may first be coated with a primer which may or may not contain antifouling agents, but otherwise contain the ingredients as described for the antifouling paint composition. In a preferred embodiment, the primer is a sea water non-erodible paint having a composition similar to that of the antifouling paint composition but which erodes at a rate of less than 1µm per 10,000 nautical miles.

Thus, the present invention also concerns a marine structure having an adherent continuous exposed sea water-erodible coating film of an antifouling paint, the coating comprising a film-forming binder system as defined in claim 1, at least one pigment which is soluble in sea water in an amount of at least 1 mg/litre at 25°C, at least one antifouling agent which may be the pigment or one of the pigments, the total pigment content of the coating being in the range of 10-60%, preferably 15-50%, in particular 20-40%, of the solids volume of coating. Furthermore, it is preferred that the sea water-soluble pigment or pigments constitute at least 10%, preferably at least 20%, in particular at least 30%, of the solids volume of the coating. Similarly, any sea water-insoluble pigments in the paint composition, when present, preferably constitute at the most 40%, preferably at the most 30%, in particular at the most 20% of the solids volume of the coating.

The antifouling paint composition according to the present invention may be applied to the marine structure to be protected in one or several successive layers, typically 1 to 5 layers, preferably 1 to 3 layers. The dry film thickness (DFT) of the coating applied per layer will typically be 10-300 µm, preferably 20-250 µm, in particular 40-200 µm. The average dry film thickness of the coating as a whole is preferably at least 40 µm, in particular 40-1,000 µm, especially 50-500 µm, such as 80-400 µm.

A useful average total dry film thickness of an antifouling paint composition on a marine structure may also be expressed in terms of the expected service time combined with the erosion rate. Thus, the dry film thickness will preferably be between 1 and 50 µm per month of expected service time, which will usually be between 40 µm and 600 µm average dry film thickness for a service time of between 1 and 5 years.

With respect to the suitably service time the erosion rate of the outermost paint layer of the paint coating of the ship's hull is preferably in the range of at least 1 µm, in particular at least 2 µm, such as at least 3 µm, especially in the range of 2-50 µm, such as in the range of 2-30 µm or in the range 3-15 µm, per 10,000 nautical miles (Nm).

The desired film thickness may be obtained either by application of a single coat or by application of several coats to achieve the desired average total dry film thickness.

In view of the relationship between film thickness and erosion rate, the present invention also concerns a method for protecting a watercraft against aquatic fouling, involving a first painting step in which an erodible antifouling paint coating is applied to the part of the exterior of the craft which, during operation of the craft, is immersed in water,

sailing the watercraft, and performing a subsequent painting step with an erodible antifouling paint, the method comprising

establishing the distance M which the watercraft is to cover between the first and the subsequent painting steps,

selecting an antifouling paint composition as defined above,

determining the value ER of the erosion rate expressed in μm per 10,000 nautical miles,

applying the paint composition in an amount resulting in an average dry film thickness T of at least 40 μm and equal to a thickness which, in view of the conditions under which the ship is to be sailed, will be sufficient to provide a coating of the paint on at least part of the coated area after the ship has covered the distance M;

sailing the watercraft and thereby eroding the coating, and performing the subsequent painting step by applying a new coating of the antifouling paint before or when the first layer has been partially or completely eroded.

In an extremely idealized and simplified model, a very rough guide to the average dry film thickness T expressed in μm may be provided by the formula

$$T=\frac{ERxM}{10,000}$$

However, as it will be well known to the person skilled in the art, the above formula is not able to take into account the many other factors, apart from covered distance, that determine the erosion rate of a particular paint coating on a ship. Such factors include, but are not limited to, average sailing speed, since higher speed will tend to erode a coating faster for a given distance; salinity and temperature of the sea regions through which the ship passes since these parameters may affect the water absorption of the polymer as well as the rate at which water-soluble pigments are leached from the coating; the operational pattern of the ship, i.e. primarily the ratio between time at sea and time in port since erosion of the coating also takes place, albeit at a significantly lower rate, when the ship is stationary; as well as the fact that erosion of a paint coating on the hull of a ship does not proceed at the same rate on different areas of the hull in that the coating will probably be eroded faster for example at the bow or the rudder than for example at the keel or at the water line.

As a result of such influences, the optimum dry film thickness of a paint coating on a ship operated according to the method of the invention will vary considerably compared to the average dry film thickness calculated from the simple formula above and may in practice vary between 0.1 and 10 times this calculated thickness. However, it will be well within the capabilities of the person skilled in the art to determine the average dry film thickness as well as the dry film thickness distribution on a ship given the distance M and the erosion rate ER when taking into consideration i.a. the various factors discussed above.

The discussion above is initially directed to the situation where a coat of a single erodible paint composition is used. However, the method of the invention may also be applied to a situation where the part of the exterior of the craft which, during operation of the craft, is immersed in water is coated with several superimposed layers of several paints, especially where such coats have different erosion rates. Thus, it would in some circumstances be advantageous for the craft to be provided with for example three erodible coats, where the first or innermost coat has a relatively slow erosion rate such as between 1 and 5 μm per 10,000 nautical miles when tested as described above, the second coat has a higher erosion rate such as between 2 and 10 μm per 10,000 nautical miles, and the third and outermost coat has a still higher erosion rate of for example between 3 and 20 μm per 10,000 nautical miles or even higher. Such coating patterns would have the advantage that it would reduce the chance of the craft suddenly being without any erodible coating at all on part of or all of the exterior of the craft which is immersed in water during operation of the craft, since the erosion rate becomes progressively slower as the coating layers are eroded away. It is to be understood that the application of such multi-layer coatings is also encompassed by the method of the invention.

The invention is further illustrated by means of the following examples.

EXAMPLE 1

A 500 ml four-necked flask equipped with a thermometer, a Dean-Stark trap, a stirrer and an addition funnel was charged with 135.2 g dimer fatty acid (Pripol® 1009 from Unichema Chemicals; 1% w/w $C_{18}$-monomer, 98% w/w $C_{36}$-dimer, 1% w/w $C_{54}$-and higher tri- and polymers), 30 g of xylene and 10 drops of defoamer (2% DC-Antifoam-A™ (silicone-based foam control agent from Dow Corning), 68 % white spirit, 30 % isobutanol). The mixture was heated

under nitrogen to 130°C and 57.5 g Jeffamine® D-230 (aminated polyoxypropylene glycols of average molecular weight 230 from Huntsman Chem. Corp., USA) were added over 45 min. The reaction mixture was then heated to 200°C with continuous removal of water until no further water was generated. The resulting solution was diluted with 63 g xylene and 29 g 1-butanol.

EXAMPLE 2

A 500 ml four-necked flask equipped with a thermometer, a Dean-Stark trap, a stirrer and an addition funnel was charged with 112.7 g dimer fatty acid, 30 g of xylene and 30 drops of defoamer (2% DC-Antifoam-A™, 68 % white spirit, 30 % isobutanol). The mixture was heated under nitrogen to 130°C and 83.3 g Jeffamine® D-400 (aminated polyoxypropylene glycols of average molecular weight 400 from Huntsman Chem. Corp., USA) were added over 35 min. The reaction mixture was then heated to 200°C with continuous removal of water until no further water was generated. The resulting solution was diluted with 66 g xylene and 30 g 1-butanol.

EXAMPLE 3

A 500 ml four-necked flask equipped with a thermometer, a Dean-Stark trap, a stirrer and an addition funnel was charged with 45 g dimer fatty acid, 30 g of xylene and 30 drops of defoamer (2% DC-Antifoam-A™, 68 % white spirit, 30 % isobutanol). The mixture was heated under nitrogen to 130°C and 166.7 g Jeffamine® D-2000 (aminated polyoxypropylene glycols of average molecular weight 2000 from Huntsman Chem. Corp., USA) were added over 55 min. The reaction mixture was then heated to 215°C with continuous removal of water until no further water was generated. After filtration the resulting solution was diluted with 50 g xylene and 19 g 1-butanol.

EXAMPLE 4

A 500 ml four-necked flask equipped with a thermometer, a Dean-Stark trap, a stirrer and an addition funnel was charged with 135.2 g dimer fatty acid, 30 g of xylene and 10 drops of defoamer (2% DC-Antifoam-A™, 68 % white spirit, 30 % isobutanol). The mixture was heated under nitrogen to 130°C and 150 g Jeffamine® ED-600 (*poly(oxypropylene-co-oxyethylene*) of average molecular weight 600 from Huntsman Chem. Corp., USA) were added over 40 min. The reaction mixture was then heated to 210°C with continuous removal of water until no further water was generated. The resulting solutiun was diluted with 112 g xylene and 43 g 1-butanol.

EXAMPLE 5

A 1000 ml four-necked flask equipped with a thermometer, a Dean-Stark trap, a stirrer and an addition funnel was charged with 123.8 g distilled Scandinavian tall oil fatty acid, 213.9 g dimer fatty acid, 50 g of xylene and 10 drops of defoamer (2% DC-Antifoam-A™, 68 % white spirit, 30 % isobutanol). The mixture was heated under nitrogen to 130°C and 167.9 g Jeffamine® T-403 (trifunctional (i.e. three amino groups per molecule) polyoxypropylene glycols of average molecular weight 400 from Huntsman Chem. Corp., USA) were added over 50 min. The reaction mixture was then heated to 200°C with continuous removal of water until no further water was generated. The resulting solution was diluted with 200 g xylene and 78.8 g 1-butanol.

EXAMPLE 6

A 500 ml four-necked flask equipped with a thermometer, a Dean-Stark trap, a stirrer and an addition funnel was charged with 83 g isophthalic acid and 166 g of xylene. The mixture was heated under nitrogen to 130°C and 209 g Jeffamine® D-400 were added over 30 min, followed by 37 g of xylene. The reaction mixture was then heated to 140°C with continuous removal of water until no further water was generated. The resulting solution was diluted with 122 g of 1-butanol.

EXAMPLE 7

In the manner described in Example 6 86 g of 1,3-cyclohexanedicarboxylic acid dissolved in 118 g of xylene were reacted with 209 g Jeffamine® D-400. The resulting solution was diluted with 95 g of xylene and 66 g of 1-butanol.

EXAMPLE 8

A 500 ml four-necked flask equipped with a thermometer, a Dean-Stark trap, a stirrer and an addition funnel

was charged with 43 g of 1,3-cyclohexanedicarboxylic acid and 55 g of xylene. The mixture was heated under nitrogen to 130°C and a mixture of 63 g Jeffamine® D-400 and 16 g Vestamin® TMD (Vestamin® TMD from Hüls AG is an isomeric mixture of 2,2,4-trimethylhexamethylenediamine and 2,4,4-trimethylhexamethylenediamine) was added over 30 min, followed by 41 g of xylene. The reaction mixture was then heated under nitrogen to 140°C with continuous removal of water until no further water was generated. The resulting solution was diluted with 76 g of 1-butanol.

EXAMPLE 9

In the manner described in Example 8 were 54 g 1,3-cyclohexanedicarboxylic acid dissolved in 52 g of xylene reacted with a mixture of 34 g Vestamin® TMD and 39 g Jeffamine® D-400. The resulting solution was diluted with 95 g of xylene and 54 g of 1-butanol.

EXAMPLE 10

A 500 ml four-necked flask equipped with a thermometer, a Dean-Stark trap, mechanical stirrer, nitrogen inlet and an addition funnel was charged with 44.18 g dimer fatty acid, 4.43 g of 1,4-cyclohexanedicarboxylic acid and 13.8 g of xylene. The reaction mixture was heated under nitrogen to 140°C and 1/3 of a mixture of 65.03 g Jeffamine® D-400 and 24.8 g Vestamin® TMD was added over 15 min. This mixture was kept at reflux for 4 h, followed by the addition of 9.45 g of 1,4-cyclohexanedicarboxylic acid and 7.0 g of xylene. Reflux was continued for 2 h, whereafter another 1/3 of the amine mixture was added over 15 min. This mixture was kept at reflux for 1 h, followed by the addition of 26.5 g of 1,4-cyclohexanedicarboxylic acid and 10 g of xylene. Reflux was continued for 1 h, whereafter the remaining 1/3 of the amine mixture was added over 30 min. The reaction mixture was refluxed for another 6 h. During the last 2 h of reflux the solvent was slowly stripped. The remaining reaction mixture was finally vacuum stripped for 15 min at 215°C and 10 mbar. The reaction mixture was cooled to 120°C and diluted with a mixture of 136.8 g of xylene and 304.3 g of 1-butanol.

EXAMPLE 11

A 500 ml four-necked flask equipped with a thermometer, a Dean-Stark trap, mechanical stirrer, nitrogen inlet and an addition funnel was charged with 108.4 g 2,2,4-trimethyladipic acid and 120 g of xylene. The reaction mixture was heated under nitrogen to 140°C and a mixture of 62.5 g Jeffamine® D-400 and 55.7 g trimethylhexamethylene diamine (isomeric mixture of 2,2,4-trimethylhexamethylene diamine and 2,4,4-trimethylhexamethylene diamine) was added over 25 min. This mixture was kept at reflux for 20 h, water being removed constantly. The mixture was then cooled to 110°C and diluted with 108 g of 1-butanol.

EXAMPLE 12

A 500 ml four-necked flask equipped with a thermometer, a Dean-Stark trap, mechanical stirrer, nitrogen inlet and an addition funnel was charged with 42.36 g of dimer fatty acid, 38.75 g of 1,4-cyclohexane dicarboxylic acid and 48 g of xylene. The reaction mixture was heated under nitrogen to 150°C and 184.7 g of Jeffamine® ED-600 were added over 40 min. The resulting mixture was kept at reflux for a total of 6:15 hours followed by vacuum stripping of the solvent (45 min, 220°C, 10 mbar). The reaction mixture was cooled to 120°C and diluted with a mixture of 94 g of 1-butanol and 94 g of xylene.

EXAMPLE 13

In the manner described in Example 12 a mixture 22.8 g of dimer fatty acid, 59.9 g of terephthalic acid, and 30 g of xylene was reacted with a mixture of 25.5 g of Vestamin® TMD and 100.0 g of Jeffamine® D-400 for 11 hours followed by vacuum stripping of the solvent (0.5 h, 230°C, 100 mbar). The resulting solution was diluted with 98 g of xylene and 98 g of 1-butanol.

EXAMPLE 14

A 500 ml four-necked flask equipped with a thermometer, a Dean-Stark trap, mechanical stirrer, nitrogen inlet and an addition funnel was charged with 31.1 g of dimer fatty acid, 28.4 g of 1,4-cyclohexane dicarboxylic acid, 30 g of xylene, and 1.78 g of phosphoric acid (85 %). The reaction mixture was heated under nitrogen to 155°C and a mixture of 64.1 g of Jeffamine® D-400 and 132.0 g of Jeffamine® D-2000 were added over 50 min. The resulting mixture was kept at reflux for a total of 3 hours followed by vacuum stripping of the solvent (65 min, 220°C, 40 mbar).

The reaction mixture was cooled to 120°C and diluted with a mixture of 123.8 g of 1-butanol and 123.8 g of xylene.

EXAMPLE 15

In the manner described in Example 14 a mixture 31.1 g of dimer fatty acid, 28.4 g of 1,4-cyclohexane dicarboxylic acid, 50 g of xylene, and 1.78 g of phosphoric acid (85 %) was reacted with a mixture of 125.4 g of Jeffamine® D-400, 60.9 g Jeffamine® D-2000 and 4.8 g of Jeffamine® T-403 for 3 hours followed by vacuum stripping of the solvent (1 h, 200°C, 100 mbar). The resulting solution was diluted with 62 g of xylene and 62 g of 1-butanol.

EXAMPLE 16

A 1 l three-necked flask equipped with a thermometer, a reflux condenser, nitrogen inlet, magnetic stirrer, and an addition funnel was charged with 24.1 g piperazine, 14.4 g of diethylene triamine, 1.05 g of 2,4,6-tris(dimethylaminomethyl)phenol, and 175 g of xylene. The mixture was heated under nitrogen to 80°C and a mixture of 186.5 g of polypropyleneglycol diglycidylether (POLYPOX R 19, U. Prümmer-Chemie GmbH, Baltringen FRG, epoxy equivalent weight 333), 45.8 g bisphenol A diglycidylether (Epikote 828, Shell International Chemical Co., UK, epoxy equivalent weight 191), and 29.5 g of xylene was added over 50 min keeping the temperature at 80°C. The resulting mixture was stirred at this temperature for 4:20 hours and was cooled to room temperature over night.

The properties of the polymers obtained are summarized in Table 1.

Table 1

| Example | Solids weight ratio(1) [%] | Solvent composition xylene:butanol | Viscosity(2) | Density [g/ml] | $M_w$(3) | Acid value(4) | Amine value(5) |
|---|---|---|---|---|---|---|---|
| 1 | 62 | 2.17 | Z-4-Z-5 | 0.92 | 21,000 | 67 | 1 |
| 2 | 60 | 2.20 | Z | 0.92 | 23,800 | 10 | 2 |
| 3 | 61 | 2.63 | Q | 0.93 | 26,000 | 3 | 3 |
| 4 | 61 | 2.61 | Y | 0.94 | 23,100 | 3 | 6 |
| 5 | 61 | 2.54 | X-Y | 0.92 | 27,100 | 14 | 5 |
| 6 | 59 | 1.63 | U-V | 0.98 | 2,100 | 28 | 0 |
| 7 | 53 | 3.21 | O-S | 0.95 | 2,300 | 16 | 7 |
| 8 | 41 | 1.02 | J-K | 0.93 | 1,800 | 7 | 4 |
| 9 | 50 | 1.13 | Z-1 | 0.94 | N/A | 7 | 8 |
| 10 | 27 | 0.45 | D | 0.87 | 14,700 | 13 | 4 |
| 11 | 48 | 1.11 | S | 0.94 | N/A | 28 | N/A |
| 12 | 60 | 1.00 | W-X | 0.96 | 11,100 | 8 | 58 |
| 13 | 50 | 1.00 | X-Y | 0.95 | 11,400 | 9 | 41 |
| 14 | 51 | 1.00 | T | 0.91 | 22,400 | 7 | 53 |
| 15 | 61 | 1.00 | Z3-Z4 | 1.00 | 28,600 | 6 | 19 |
| 16 | 56 | xylene | V-W | 0.98 | 2,400 | N/A | 211 |

(1) ASTM D 1644-88

(2) Gardner viscosity, ASTM D 1545-76

(3) Weight average molecular weight. Determined by gel permeation chromatography. Calibration with narrow-distributed polystyrene samples.

(4) ASTM D 1639-70

(5) Modified after ASTM D-2074 using acetonitrile as solvent and crystal violet as indicator

The polymer obtained in the Examples 1, 2, 3, 4, 5, 9, 10, 12, and 16 were formulated to model paints 1 through 15. The solvents employed for these paints were xylene/1-butanol 3:1 (w/w) for model paints 1 through 5 and 8, xylene/1-butanol 1:1 (w/w) for model paints 6, 7, 14, and 15, pure xylene for model paint 9, 12, and 13, and xylene/1-butanol 1.45:1 (w/w) for model paints 10 and 11. The content in percent by weight of non-volatile (NV) was measured according to ASTM D 1644-88, test method A and is given together with the solids composition of these model paints in the following table (volume percent solids given).

Table 2

| Model paint | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Example 1 | 34 | | | | | | | | | | | | | | |
| Example 2 | | 34 | | | | | | | | | | | | | |
| Example 3 | | | 34 | | | | | | | | | | | | |
| Example 4 | | | | 34 | | | | | | | | | | | |
| Example 5 | | | | | 34 | | | | | | | | | | |
| Example 9 | | | | | | 30 | | | | 60 | 30 | | | | |
| Example 10 | | | | | | | 30 | | | | | | | | |
| Example 12 | | | | | | | | | | | | 12 | 20 | | |
| Example 16 | | | | | | | | | | | | | | 12 | 20 |
| Reference 1 (1) | | | | | | | | 42 | | | | | | | |
| Reference 2 (2) | | | | | | | | | 60 | | | | | | |
| Gum rosin | 26 | 26 | 26 | 26 | 26 | 30 | 30 | 18 | | | 23 | 48 | 40 | 48 | 40 |
| Cuprous oxide | 10 | 10 | 10 | 10 | 10 | 10 | 10 | 10 | 10 | 10 | 10 | 10 | 10 | 10 | 10 |
| Zinc oxide | 26 | 26 | 26 | 26 | 26 | 26 | 26 | 26 | 26 | 26 | 26 | 26 | 26 | 26 | 26 |
| Bentone | 4 | 4 | 4 | 4 | 4 | 4 | 4 | 4 | 4 | 4 | 4 | 4 | 4 | 4 | 4 |
| Tricresyl-phosphate | | | | | | | | | | 7 | | | | | |
| NV [w/w%] | 38.3 | 42.5 | 43.1 | 46.7 | 39.9 | 74.7 | 62.0 | 46.2 | 44.8 | 55.0 | 71.7 | 59.2 | 55.8 | 69.8 | 68.8 |

(1) Reference 1 is a commercial polyamide comprising equimolar amounts of ethylene diamine and dimer fatty acid of number average molecular weight 3,000.
(2) Reference 2 is a commercial poly(methyl methacrylate-co-tributyltin methacrylate) of number average molecular weight 19,000, the molar ratio between methyl methacrylate and tributyltin methacrylate being 2:1.

For the preparation of the model paints 1 to 15, 200 ml of the thoroughly mixed coating ingredients were introduced into a tight metallic container of 0.5 1 capacity together with 100 ml (bulk volume) of glass pearls with a diameter of 2-3 mm. The container was then shaken for 45 minutes on a mechanical shaker. The coating composition was separated from the glass pearls by filtration and the fineness of dispersion was determined (ASTM D 1210-79) to be lower than 30μm.

Stainless steel panels (for model paints 1-11) or acrylic test panels (for model paints 12-15) (13.5 x 7 cm) with a curvature corresponding to that of a cylinder with a diameter of 1 meter were first coated on its convex surface with 80 μm (dry film thickness, DFT) of a commercial vinylic primer (Hempanyl Tar 1628, from Hempel's Marine Paints) applied by air spray. The primed panel was then coated with the above experimental coating composition in a DFT of 200 μm using a Doctor Blade applicator. After drying, bands of 1 cm width of a commercial, non-erodible vinylic anti-fouling coating (Classic 7655, from Hempel's Marine Paints) were applied along each longitudinal edge by dipping. As a result of this, the central part with a width of 5 cm remained uncovered by the non-erodible coating.

The panel was fixed onto the convex surface of a cylindrical drum of 1 meter in diameter and was rotated in sea water with a salinity in the range of 37-38 parts per thousand at an average temperature of 26°C at a test site in the harbour of Villanueva y Geltrú in northeastern Spain (se also Morales E. & Arias E., Rev. Iber. Corros. y Prot., vol XIX(2), 1988, pp 91-96). The rotor was rotated at a peripheral speed of 15 knots, usually for a relative distance of between 10,000 and 100,000 nautical miles

The erosion results of the above described rotor testing for model paints 1 to 15 are collected in Table 3.

Table 3

| Model paint | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Erosion rate (1) [$\mu m$/10,000 Nm] | 5 | 10 | 15 | 15 | 1 | 6 | 12 | 3 | 20 | 2 | 3 | 12 | 32 | 8 | 71 |

(1) The erosion rate for model paints 1-11 was determined by isoscope measurements, whereas the erosion rate for the model paints 12-15 was determined by microscope measurements (chips (1.0 x 0.5 $cm^2$) were collected from the test panel in such a way that their surface comprised both a part coated with the experimental coating only as well as a part coated with both experimental coating and the non-erodible coating. The chips were embedded in paraffin wax and cut with a microtome. Cross sections of the experimental coating were examined under a microscope.)

## Claims

1. A sea water-erodible antifouling paint composition for protecting marine surfaces, comprising a binder system, at least one pigment which is soluble in sea water in an amount of at least 1 mg/litre at 25°C, at least one antifouling agent which may be the pigment or one of the pigments, the total pigment content of the composition being in the range of 10-60% of the solids volume of the paint composition, the sea water-soluble pigment or pigments constituting at least 10% of the solids volume of the paint composition, any sea water-insoluble pigments, when present, constituting at the most 50% of the solids volume of the paint composition,

   said binder system comprising at least one erodibility-conferring polymer of the general formula (I)

$$X\text{-}D^3\text{-}A\text{-}Y \qquad (I)$$

   wherein A is a polymer chain consisting of

   a) from 1 to 5 segment sets

$$-[R^1{}_i\text{-}D^1{}_i]_{m(i)}-$$

   where the suffix i denotes the segment set number, and wherein each m(i) is an integer being at the most 100 with the proviso that the sum of the parameters m(i) is in the range 1-300, and

   b) from 0 to 8 segment sets

$$-[R^2{}_j\text{-}D^2{}_j]_{n(j)}-$$

   where the suffix j denotes the segment set number, and wherein each n(j) is an integer being at the most 100 with the proviso that the sum of the parameters n(j) is in the range 1-300,

   the individual segments $R^1{}_i$-$D^1{}_i$ and $R^2{}_j$-$D^2{}_j$ being linked together in the polymer chain A as a statistical copolymer, an alternating copolymer, a block copolymer or a combination thereof;

   $R^1{}_i$ within a segment set is a group of the formula (III)

$$-(R_x\text{-}O)_p\text{-}(R_y\text{-}O)_q\text{-}(R_z\text{-}O)_r\text{-}R_v- \qquad (III)$$

   wherein $R_x$, $R_y$, $R_z$ and $R_v$ independently are $C_{1\text{-}4}$-alkylene, and p, q, and r are integers in the range 0-100 with the proviso that the sum p + q + r is at least 1;

   $R^2{}_j$ within a segment set is alkylene, alkenylene, arylene, alkylarylene, alkylarylalkylene, arylalkylarylene, or heterocyclylene which may be optionally substituted;

   $D^1{}_i$ within a segment set, $D^2{}_j$ within a segment set, and $D^3$ independently are -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-, -C(O)-S-, -S-C(O)-, -O-C(O)-O-, -C($R_0$)=N-, -N=C($R_0$)-, -N($R_0$)-$CH_2$-CH(OH)-$CH_2$-O-, -O-$CH_2$-CH(OH)-$CH_2$-N($R_0$)-, or -N($R_0$)-C(O)-N($R_0$)-, wherein $R_0$ is $C_{1\text{-}i2}$-alkyl, aryl or H; and

   X and Y independently are hydrogen, alkyl, aryl or heterocyclyl which may be optionally substituted.

2. A paint composition according to claim 1, wherein $D^1{}_i$, $D^2{}_j$ and $D^3$ independently are selected from -N($R_0$)-$CH_2$-CH(OH)-$CH_2$-O-, -O-$CH_2$-CH(OH)-$CH_2$-N($R_0$)-, -C(O)-O-, -O-C(O)-, -N($R_0$)-C(O)-, -C(O)-N($R_0$)-, -N($R_0$)- and -O-.

3. A paint composition according to claim 1 or 2, wherein $R_0$ is hydrogen, methyl, ethyl or phenyl.

**4.** A paint composition according to any of the preceding claims, wherein $R_x$, $R_y$, $R_z$ and $R_v$ independently are selected from ethylene and isopropylene.

**5.** A paint composition according to any of the preceding claims, wherein $R^2_j$ is selected from alkylene, alkenylene or arylene which may optionally be substituted.

**6.** A paint composition according to any of the preceding claims, wherein the sum of the parameters m(i) in the segment sets under a) is at the most 50, and the sum of the parameters n(j) in the segment sets under b) is at the most 50.

**7.** A paint composition according to any of the preceding claims, wherein X and Y independently are hydrogen, methyl, ethyl or phenyl which may be optionally substituted.

**8.** A paint composition according to any of the preceding claims, wherein the polymer chain A consists of

a) from 1 to 3 segment sets

$$-[R^1_i-D^1_i]_{m(i)}-$$

and

b) from 1 to 5 segment sets

$$-[R^2_j-D^2_j]_{n(j)}-$$

wherein $R^1_i$, $R^2_j$, $D^1_i$, $D^2_j$, m(i) and n(j) are as defined in any of the preceding claims.

**9.** A paint composition according to any of the preceding claims, wherein the total pigment content of the composition is in the range of 25-50% of the solids volume of the paint composition.

**10.** A paint composition according to any of the preceding claims, wherein the sea water-soluble pigment or pigments constitutes at least 20% of the solids volume of the paint composition.

**11.** A paint composition according to any of the preceding claims, wherein any sea water-insoluble pigments, when present, constitute at the most 30% of the solids volume of the paint composition.

**12.** A paint composition according to any of the preceding claims, wherein the binder system constitute 4-70% of the solids volume of the paint composition.

**13.** A paint composition according to any of the preceding claims, wherein the polymer or polymers of formula I constitute(s) 20-100% of the solids volume of the binder system.

**14.** A paint composition according to any of the preceding claims, wherein the binder system comprises additional binder components selected from the group consisting of rosin, rosin derivatives, natural oils and derivatives thereof, saturated polyester resins, vinyl resins, alkyd resins and modified alkyd resins, hydrocarbon resins, chlorinated polyolefins, styrene copolymers, acrylic resins, hydroxy-acrylate copolymers, polyamide resins, cyclised rubbers, epoxy esters, epoxy urethanes, polyurethanes, epoxy polymers, hydroxy-polyether resins, polyamine resins, silicone resins, silicone modified resins, and co-polymers thereof.

**15.** A paint composition according to any of the preceding claims, wherein the additional binder component(s) constitute (s) 0-80% of the solids volume of the binder system.

**16.** A paint composition according to any of the preceding claims, wherein the antifouling agent is selected from organometals, metal biocides, heterocyclic nitrogen compounds, heterocyclic sulphur compounds, urea derivatives, amides or imides of carboxylic acids, sulphonic acids and of sulphenic acids, salts or esters of carboxylic acids, amines, substituted methane, substituted benzene, tetraalkyl phosphonium halogenides, guanidine derivatives,

disulphides, and mixtures thereof.

**17.** A paint composition according to any of the preceding claims, wherein the content of the antifouling agent(s) is in the range of 2-50% of the solids volume of the paint composition.

**18.** A paint composition according to any of the preceding claims, wherein the pigments are selected from grades of titanium dioxide, red iron oxide, zinc oxide, carbon black, graphite, yellow iron oxide, phthalocyanine blue, and phthalocyanine green, and pigment-like ingredients selected from calcium carbonate, dolomite, talc, mica, barium sulphate, kaolin, and quartz flour.

**19.** A paint composition according to any of the preceding claims, which further comprises a liquid carrier selected from water, alcohols, aliphatic and aromatic hydrocarbons, ketones, ether alcohols, esters, chlorinated hydrocarbons, amide solvents, and mixtures thereof.

**20.** A sea water-erodible antifouling paint composition for protecting marine surfaces, comprising a binder system, at least one pigment which is soluble in sea water in an amount of at least 1 mg/litre at 25°C, at least one antifouling agent which may be the pigment or one of the pigments, the total pigment content of the composition being in the range of 10-60% of the solids volume of the paint composition, the sea water-soluble pigment or pigments constituting at least 10% of the solids volume of the paint composition, any sea water-insoluble pigments, when present, constituting at the most 50% of the solids volume of the paint composition, said binder system comprising at least one erodibility-conferring polymer of the general formula (II)

$$X\text{-}D^3\text{-}B\text{-}Y \quad \text{(II)}$$

wherein B is a polymer chain consisting of

a) from 0 to 5 segment sets

$$-[R^1{}_i\text{-}D^1{}_i]_{m(i)}-$$

where the suffix i denotes the segment set number, and wherein each m(i) is an integer being at the most 100 with the proviso that the sum of the parameters m(i) is in the range 1-300, and

b) from 0 to 8 segment sets

$$-[R^2{}_j\text{-}D^2{}_j]_{n(j)}-$$

where the suffix j denotes the segment set number, and wherein each n(j) is an integer being at the most 100 with the proviso that the sum of the parameters n(j) is at the most 300,

c) from 1 to 3 segment sets

$$-[R^3{}_k\text{-}\underset{\displaystyle [R^5{}_k\text{-}D^5{}_k]-}{\underset{|}{E_k}}\text{-}R^4{}_k\text{-}D^4{}_k]_{s(k)}-$$

where the suffix k denotes the segment set number, and wherein each s(k) is an integer being at the most 50 with the proviso that the sum of the parameters s(k) is at the most 100,

with the proviso that at least one of the segment sets defined in a) and b) is present in the polymer, the individual segments $R^1{}_i$-$D^1{}_i$, $R^2{}_j$-$D^2{}_j$, and $R^3{}_k$-$E_k$< ($R^5{}_k$-$D^5{}_k$-)-$R^4{}_k$-$D^4{}_k$- being linked together in the polymer B as a branched

statistical copolymer, an alternating copolymer, a branched block copolymer or a combination thereof;

$R^1_i$ within a segment set is a group of the formula (III)

$$-(R_x\text{-}O)_p\text{-}(R_y\text{-}O)_q\text{-}(R_z\text{-}O)_r\text{-}R_v\text{-} \quad \text{(III)}$$

wherein $R_x$, $R_y$, $R_z$ and $R_v$ independently are $C_{1-4}$-alkylene, and p, q, and r are integers in the range 0-100 with the proviso that the sum p + q + r is at least 1;

$R^2_j$ within a segment set is alkylene, alkenylene, arylene, alkylarylene, alkylarylalkylene, arylalkylarylene, or heterocyclylene which may be optionally substituted;

$R^3_k$, $R^4_k$, and $R^5_k$ within a segment are the same biradicals as defined above for $R^1_i$ and $R^2_j$ or a single bond;

$D^1_i$ within a segment set, $D^2_j$ within a segment set, and $D^3$ independently are -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-, -C(O)-S-, -S-C(O)-, -O-C(O)-O-, -C($R_0$)=N-, -N=C($R_0$)-, -N($R_0$)-$CH_2$-CH(OH)-$CH_2$-O-, -O-$CH_2$-CH(OH)-$CH_2$-N($R_0$)-, or -N($R_0$)-C(O)-N($R_0$)-, wherein $R_0$ is $C_{1-12}$ alkyl, aryl or H; and

$D^4_k$ within a segment set and $D^5_k$ within a segment set are the same as defined above for $D^1_i$ or a single bond;

$E_k$ within a segment set is selected from >$CR^5$-, >N-, >P-, >P(=O)-, >Si($R^6$)-, aryl triradicals, cycloalkyl triradicals and heterocyclyl triradicals which are optionally substituted, where $R^5$ is hydrogen, hydroxy, $C_{1-12}$-alkoxy, $C_{1-12}$-alkyl, $C_{2-12}$-alkenyl, aryl or $D^3$-H, and

$R^6$ is hydrogen, $C_{1-12}$-alkyl, $C_{1-12}$-alkoxy, $C_{2-12}$-alkenyl, or aryl; and

X and Y independently are hydrogen, alkyl, aryl or heterocyclyl which may be optionally substituted.

**21.** A paint composition according to claim 20, wherein $D^1_i$, $D^2_j$ and $D^3$ independently are selected from -N($R_0$)-$CH_2$-CH(OH)- $CH_2$-O-, -O-$CH_2$-CH(OH)-$CH_2$-N($R_0$)-, -C(O)-O-, -O-C(O)-, -N($R_0$)-C(O)-, -C(O)-N($R_0$)-, -N($R_0$)- and -O-.

**22.** A paint composition according to claim 20 or 21, wherein $D^{4k}$ and $D^5_k$ independently are selected from -N($R_0$)-$CH_2$-CH(OH)- $CH_2$-O-, -O-$CH_2$-CH(OH)-$CH_2$-N($R_0$)-, -C(O)-O-, -O-C(O)-, -N($R_0$)-C(O)-, -C(O)-N($R_0$)-, -N($R_0$)-, -O-, and a single bond.

**23.** A paint composition according to any of the claims 20-22, wherein $R_0$ is hydrogen, methyl, ethyl or phenyl.

**24.** A paint composition according to any of the claims 20-23, wherein $R_x$, $R_y$, $R_z$ and $R_y$ independently are selected from ethylene and isopropylene.

**25.** A paint composition according to any of the claims 20-24, wherein $R^2_j$ is selected from alkylene, alkenylene or arylene which may optionally be substituted.

**26.** A paint composition according to any of the claims 20-25, wherein the groups $R^3_k$, $R^4_k$, and $R^5_k$ independently are selected from the group of the formula (III) defined for $R^1_j$, alkylene, alkenylene, arylene, alkylarylene, and alkylarylalkylene.

**27.** A paint composition according to any of the claims 20-26, wherein the group $E_k$ is selected from optionally substituted methine (>CH-), >N-, optionally substituted triradicals of benzene, optionally substituted triradicals of naphthalene, and optionally substituted triradicals of heterocyclic compounds.

**28.** A paint composition according to any of the claims 20-27, wherein the sum of the parameters m(i) in the segment sets under a) is at the most 50, the sum of the parameters n(j) in the segment sets under b) is at the most 50, and the sum of the parameters s(k) in the segment sets under c) is at the most 30.

**29.** A paint composition according to any of the claims 20-28, wherein X and Y independently are selected from hydrogen, methyl, ethyl, phenyl which may be optionally substituted.

**30.** A paint composition according to any of the claims 20-29, wherein the polymer B consists of

a) from 0 to 3 segment sets

$$-[R^1{}_i-D^1{}_i]_{m(i)}-,$$

b) from 0 to 5 segment sets

$$-[R^2{}_j-D^2{}_j]_{n(j)}-,$$

and

c) 1 segment set

$$\begin{array}{c} -[R^3{}_k-E_k-R^4{}_k-D^4{}_k]_{s(k)}- \\ | \\ [R^5{}_k-D^5{}_k]- \end{array}$$

wherein $R^1{}_i$, $R^2{}_j$, $R^3{}_k$, $R^4{}_k$, $R^5{}_k$, $D^1{}_i$, $D^2{}_j$, $D^4{}_k$, $D^5{}_k$, $E_k$, m(i), n(j), s(k) are as defined above,

with the proviso that at least one of the segment sets defined in a) and b) is present in the polymer.

**31.** A paint composition according to any of the claims 20-30, wherein the total pigment content of the composition is in the range of 25-50% of the solids volume of the paint composition.

**32.** A paint composition according to any of the claims 20-31, wherein the sea water-soluble pigment or pigments constitutes at least 20% of the solids volume of the paint composition.

**33.** A paint composition according to any of the claims 20-32, wherein any sea water-insoluble pigments, when present, constitute at the most 30% of the solids volume of the paint composition.

**34.** A paint composition according to any of the claims 20-33, wherein the binder system constitute 4-70% of the solids volume of the paint composition.

**35.** A paint composition according to any of the claims 20-34, wherein the polymer or polymers of formula II constitute (s) 20-100% of the solids volume of the binder system.

**36.** A paint composition according to any of the claims 20-35, wherein the binder system comprises additional binder components selected from the same compounds as defined in claim 14.

**37.** A paint composition according to any of the claims 20-36, wherein the additional binder component(s) constitute (s) 0-80% of the solids volume of the binder system.

**38.** A paint composition according to any of the claims 20-37, wherein the antifouling agent is selected from the same compounds as defined in claim 16, and mixtures thereof.

**39.** A paint composition according to any of the claims 20-38, wherein the content of the antifouling agent(s) is in the range of 2-50% of the solids volume of the paint composition.

**40.** A paint composition according to any of the claims 20-39, wherein the pigments are selected from the same compounds as defined in claim 18, and mixtures thereof.

**41.** A paint composition according to any of the claims 20-40, which further comprises a liquid carrier selected from the same carriers as defined in claim 19, and mixtures thereof.

## Patentansprüche

**1.** Durch Seewasser erodierbares, fäulnisverhinderndes Anstrichmittel zum Schutz von Meerwasser ausgesetzten Oberflächen, umfassend ein Bindersystem, mindestens ein Pigment, das in Seewasser in einer Menge von mindestens 1 mg/ Liter bei 25°C löslich ist, mindestens ein fäulnisverhinderndes Mittel, bei dem es sich um das Pigment oder um eines der Pigmente handeln kann, wobei der Gesamtpigmentinhalt der Zusammensetzung im Bereich von 10-60% des Trockensubstanzvolumens des Anstrichmittels liegt, das (die) in Seewasser lösliche(n) Pigment oder Pigmente mindestens 10% des Trockensubstanzvolumens des Anstrichmittels ausmacht/ausmachen, wobei jegliche in Seewasser unlöslichen Pigmente, falls anwesend, höchstens 50% des Trockensubstanzvolumens des Anstrichmittels ausmachen,

wobei das Bindersystem mindestens ein erodierbarkeitserbringendes Polymer der allgemeinen Formel (1),

$$X\text{-}D^3\text{-}A\text{-}Y \qquad (I)$$

umfaßt,

in der A eine Polymerkette ist, die aus

a) von 1 bis 5 Segmentsets

$$-[R^1{}_i\text{-}D^1{}_i]_{m(i)}-$$

wobei der Suffix i die Nummer des Segmentsets bezeichnet, und worin jeder m(i) eine Ganzzahl von höchstens 100 ist, unter der Voraussetzung, daß die Summe der Parameter m(i) im Bereich 1-300 liegt, und

b) von 0 bis 8 Segmentsets

$$-[R^2{}_j\text{-}D^2{}_j]_{n(j)}-$$

wobei der Suffix j die Nummer des Segmentsets bezeichnet, und worin jeder n(j) eine Ganzzahl von höchstens 100 ist, unter der Voraussetzung, daß die Summe der Parameter n(j) im Bereich 1-300 liegt,

die individuellen Segmente $R^1{}_i$-$D^1{}_i$ und $R^2{}_j$-$D^2{}_j$ in der Polymerkette A als ein statistisches Copolymer, ein Wechselcopolymer, ein Blockcopolymer oder eine Kombination derselben miteinander verbunden sind;

$R^1{}_i$ innerhalb eines Segmentsets eine Gruppe der Formel (III)

$$-(R_x\text{-}O)_p\text{-}(R_y\text{-}O)_q\text{-}(R_z\text{-}O)_r\text{-}R_v- \qquad (III)$$

ist,

worin $R_x$, $R_y$, $R_z$ und $R_v$ jeweils unabhängig $C_{1-4}$-Alkylen sind, und p, q und r Ganzzahlen im Bereich 0-100 sind, unter der Voraussetzung, daß die Summe p + q + r mindestens beträgt;

$R^2{}_j$ innerhalb eines Segmentsets Alkylen, Alkenylen, Arylen, Alkylarylen, Alkylarylalkylen, Arylalkylarylen oder Heterocyklylen ist, welche gegebenenfalls substituiert werden können,

besteht;

$D^1_i$ innerhalb eines Segmentsets, $D^2_j$ innerhalb eines Segmentsets und $D^3$ jeweils unabhängig -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-, -C(O)-S-, -S-C(O)-, -O-C(O)-O-, -C($R_0$)=N-, -N =C($R_0$)-, -N($R_0$)-$CH_2$-CH(OH)-$CH_2$-O-, -O-$CH_2$-CH(OH)-$CH_2$-N($R_0$)- oder -N($R_0$)-C(O)-N($R_0$)- sind, worin $R_0$ $C_{1-12}$-alkyl, Aryl oder H ist; und

X und Y jeweils unabhängig Wasserstoff, Alkyl, Aryl oder Heterocyklyl sind, welche gegebenenfalls substituiert werden können.

**2.** Anstrichmittel gemäß Anspruch 1, worin $D^1_i$, $D^2_j$ und $D^3$ jeweils unabhängig aus -N($R_0$)-$CH_2$-CH(OH)-$CH_2$-O-, -O-$CH_2$-CH(OH)-$CH_2$-N($R_0$)-, -C(O)-O-, -O-C(O)-, -N($R_0$)-C(O)-, -C(O)-N($R_0$)-, -N($R_0$)- und -O- ausgewählt sind.

**3.** Anstrichmittel gemäß Anspruch 1 oder 2, worin $R_0$ Wasserstoff, Methyl, Ethyl oder Phenyl ist.

**4.** Anstrichmittel gemäß einem der Ansprüche 1-3, worin $R_x$, $R_y$, $R_z$ und $R_v$ jeweils unabhängig aus Ethylen and Isopropylen ausgewählt sind.

**5.** Anstrichmittel gemäß einem der Ansprüche 1-4, worin $R^2_j$ aus Alkylen, Alkenylen oder Arylen ausgewählt ist, die gegebenenfalls substituiert werden können.

**6.** Anstrichmittel gemäß einem der Ansprüche 1-5, worin die Summe der Parameter m(i) in den Segmentsets unter a) höchstens 50 beträgt und die Summe der Parameter n(j) in den Segmentsets unter b) höchstens 50 beträgt.

**7.** Anstrichmittel gemäß einem der Ansprüche 1-6, worin X und Y jeweils unabhängig Wasserstoff, Methyl oder Ethyl sind, oder Phenyl, welches gegebenenfalls substituiert werden kann.

**8.** Anstrichmittel gemäß einem der Ansprüche 1-7, worin die Polymerkette A aus

a) von 1 bis 3 Segmentsets

$$-[R^1{}_i\text{-}D^1{}_i]_{m(i)}-$$

und

b) von 1 bis 5 Segmentsets

$$-[R^2{}_j\text{-}D^2{}_j]_{n(j)}-$$

besteht,

worin $R^1_i$, $R^2_j$, $D^1_i$, $D^2_j$, m(i) und n(j) wie in einem der Ansprüche 1-7 definiert sind.

**9.** Anstrichmittel gemäß einem der Ansprüche 1-8, worin der Gesamtpigmentgehalt der Zusammensetzung im Bereich von 25-50% des Trockensubstanzvolumens des Anstrichmittels liegt.

**10.** Anstrichmittel gemäß einem der Ansprüche 1-9, worin das (die) in Seewasser lösliche(n) Pigment oder Pigmente mindestens 20% des Trockensubstanzvolumens des Anstrichmittels ausmacht/ausmachen.

**11.** Anstrichmittel gemäß einem der Ansprüche 1-10, worin jegliche in Seewasser unlöslichen Pigmente, falls anwesend, höchstens 30% des Trockensubstanzvolumens des Anstrichmittels ausmachen.

**12.** Anstrichmittel gemäß einem der Ansprüche 1-11, worin das Bindersystem 4-70% des Trockensubstanzvolumens des Anstrichmittels ausmacht.

**13.** Anstrichmittel gemäß einem der Ansprüche 1-12, worin das Polymer oder die Polymere der Formel 1 20-100%

des Trockensubstanzvolumens des Anstrichmittels ausmacht/ausmachen.

**14.** Anstrichmittel gemäß einem der Ansprüche 1-13, worin das Bindersystem zusätzliche Binderkomponenten umfaßt, welche aus einer Gruppe bestehend aus Harz (Kolophonium), Harz(Kolophonium)derivaten, natürlichen Ölen und Derivaten davon, gesättigten Polyesterharzen, Vinylharzen, Alkydharzen und modifizierten Alkydharzen, Kohlenwasserstoffharzen, chlorierten Polyolefinen, Styrol-Copolymeren, Acrylharzen, Hydroxy-acrylat-copolymeren, Polyamidharzen, Zyklokautschuk, Epoxyestern, Epoxyurethanen, Polyurethanen, Epoxypolymeren, Hydroxypolyetherharzen, Polyaminharzen, Silikonharzen, Silikon-modifizierten Harzen und Co-polymeren derselben ausgewählt sind.

**15.** Anstrichmittel gemäß einem der Ansprüche 1-14, worin die zusätzliche(n) Binderkomponente(n) 0-80% des Trockensubstanzvolumens des Bindersystems ausmacht/ausmachen.

**16.** Anstrichmittel gemäß einem der Ansprüche 1-15, worin das fäulnisverhindernde Mittel aus Organometallen, Metallbioziden, heterocyklischen Stickstoffverbindungen, heterocyklischen Schwefelverbindungen, Harnstoffderivaten, Amiden oder Imiden von Karbonsäuren, Sulfosäuren und von Sulphensäuren, Salzen oder Estern von Karbonsäuren, Aminen, substituiertem Methan, substituiertem Benzol, Tetraalkylphosphoniumhalogeniden, Guanidinderivaten, Disulfiden und Mischungen davon ausgewählt ist .

**17.** Anstrichmittel gemäß einem der Ansprüche 1-16, worin der Gehalt des/der fäulnisverhindernden Mittel(s) im Bereich von 2-50% des Trockensubstanzvolumens des Anstrichmittels liegt.

**18.** Anstrichmittel gemäß einem der Ansprüche 1-17, worin die Pigmente aus Handelsgütern von Titandioxid, rotem Eisenoxid, Zinkoxid, Carbon Black (Ruß), Graphit, gelbem Eisenoxid, Phthalocyaninblau und Phthalocyaningrün sowie pigmentartigen Bestandteilen ausgewählt sind, welche aus Calciumcarbonat, Dolomit, Talk, Glimmer, Bariumsulfat, Kaolin und Quartzmehl ausgewählt sind.

**19.** Anstrichmittel gemäß einem der Ansprüche 1-18, welches weiterhin einen flüssigen Träger umfaßt, welcher aus Wasser, Alkoholen, aliphatischen und aromatischen Kohlenwasserstoffen, Ketonen, Etheralkoholen, Estern, chlorierten Kohlenwasserstoffen, Amidolösungsmitteln und Mischungen davon ausgewählt ist.

**20.** Durch Seewasser erodierbares, fäulnisverhinderndes Anstrichmittel zum Schutz von Meerwasser ausgesetzten Oberflächen, umfassend ein Bindersystem, mindestens ein Pigment, das in Seewasser in einer Menge von mindestens 1 mg/ Liter bei 25°C löslich ist, mindestens ein fäulnisverhinderndes Mittel, bei dem es sich um das Pigment oder um eines der Pigmente handeln kann, wobei der Gesamt-Pigmentinhalt der Zusammensetzung im Bereich von 10-60% des Trockensubstanzvolumens des Anstrichmittels liegt, das (die) in Seewasser lösliche(n) Pigment oder Pigmente mindestens 10% des Trockensubstanzvolumens des Anstrichmittels ausmacht/ausmachen, wobei jegliche in Seewasser unlöslichen Pigmente, falls anwesend, höchstens 50% des Trockensubstanzvolumens des Anstrichmittels ausmachen,

wobei das Bindersystem mindestens ein erodierbarkeitserbringendes Polymer der allgemeinen Formel (II)

$$X\text{-}D^3\text{-}B\text{-}Y \qquad \text{(II)}$$

umfaßt,

in der B eine Polymerkette ist, die aus

a) von 0 bis 5 Segmentsets

$$-[R^1{}_i\text{-}D^1{}_i]_{m(i)}-$$

wobei der Suffix i die Nummer des Segmentsets bezeichnet, und worin jeder m(i) eine Ganzzahl von höchstens 100 ist, unter der Voraussetzung, daß die Summe der Parameter m(i) im Bereich 1-300 liegt, und

b) von 0 bis 8 Segmentsets

$$-[R^2{}_j\text{-}D^2{}_j]_{n(j)}-$$

wobei der Suffix j die Nummer des Segmentsets bezeichnet, und worin jeder n(j) eine Ganzzahl von höchstens 100 ist, unter der Voraussetzung, daß die Summe der Parameter n(j) höchstens 300 beträgt,

c) von 1 bis 3 Segmentsets

$$-[R^3{}_k\text{-}E_k\text{-}R^4{}_k\text{-}D^4{}_k]_{s(k)}-$$
$$|$$
$$R^5{}_k\text{-}D^5{}_k]-$$

wobei der Suffix k die Nummer der Segmentsets bezeichnet, und
worin jeder s(k) eine Ganzzahl von höchstens 50 ist, unter der Voraussetzung, daß die Summe der Parameter s(k) höchstens 100 beträgt,

unter de Voraussetzung, daß mindestens eines der in a) und b) definierten Segmentsets im Polymer anwesend ist, die individuellen Segmente $R^1{}_i$-$D^1{}_i$, $R^2{}_j$-$D^2{}_j$, und $R^3{}_k$-$E_k$< ($R^5{}_k$-$D^5{}_k$-)-$R^4{}_k$-$D^4{}_k$- im Polymer B als ein verzweigtes statistisches Copolymer, ein Wechselcopolymer, ein verzweigtes Blockcopolymer oder eine Kombination derselben miteinander verbunden sind;

$R^1{}_i$ innerhalb eines Segmentsets eine Gruppe der Formel (III)

$$-(R_x\text{-}O)_p\text{-}(R_y\text{-}O)_q\text{-}(R_z\text{-}O)_r\text{-}R_v- \qquad \text{(III)}$$

ist,
in der $R_x$, $R_y$, $R_z$ und $R_v$ jeweils unabhängig $C_{1-4}$-Alkylen sind, und p, q und r Ganzzahlen im Bereich 0-100 sind, unter der Voraussetzung, daß die Summe p + q + r mindestens beträgt;

$R^2{}_j$ innerhalb eines Segmentsets Alkylen, Alkenylen, Arylen, Alkylarylen, Alkylarylalkylen, Arylalkylarylen oder Heterocyklylen ist, welche gegebenenfalls substituiert werden können;

$R^3{}_k$, $R^4{}_k$ und $R^5{}_k$ innerhalb eines Segments dieselben Biradikalen sind, wie oben für $R^1{}_i$ und $R^2{}_j$ definiert, oder eine Einfachbindung,
besteht;

$D^1{}_i$ innerhalb eines Segmentsets, $D^2{}_j$ innerhalb eines Segmentsets und $D^3$ jeweils unabhängig -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-, -C(O)-S-, -S-C(O)-, -O-C(O)-O-, -C($R_0$)=N-, -N = C($R_0$)-, -N($R_0$)-$CH_2$-CH(OH)-$CH_2$-O-, -O-$CH_2$-CH(OH)-$CH_2$-N($R_0$)- oder -N($R_0$)-C(O)-N($R_0$)- sind, worin $R_0$ $C_{1-12}$-alkyl, Aryl oder H ist; und

$D^4{}_k$ innerhalb eines Segmentsets und $D^5{}_k$ innerhalb eines Segmentsets dasselbe sind, wie oben für $D^1{}_i$ definiert, oder eine Einfachbindung;

$E_k$ innerhalb eines Segmentsets aus >$CR^5$-, >N-, >P-, >P(=O)-, >Si($R^6$)-, Aryl-triradikalen, Cykloalkyl-triradikalen und Heterocyklyl-triradikalen, welche gegebenenfalls substituiert werden können, wobei $R^5$ Wasserstoff, Hydroxy, $C_{1-12}$-Alkoxy, $C_{1-12}$-Alkyl, $C_{2-12}$-Alkenyl, Aryl oder $D^3$-H ist, und $R^6$ Wasserstoff, $C_{1-12}$-Alkyl, $C_{1-12}$-Alkoxy, $C_{2-12}$-Alkenyl oder Aryl ist ausgewählt ist; und

X und Y jeweils unabhängig Wasserstoff, Alkyl, Aryl oder Heterocyklyl sind, welche gegebenenfalls substituiert werden können.

**21.** Anstrichmittel gemäß Anspruch 20, worin $D^1{}_i$, $D^2{}_j$ und $D^3$ jeweils unabhängig aus $-N(R_0)-CH_2-CH(OH)-CH_2-O-$, $-O-CH_2-CH(OH)-CH_2-N(R_0)-$, -C(O)-O-, -O-C(O)-, $-N(R_0)-C(O)-$, $-C(O)-N(R_0)-$, $-N(R_0)-$ und -O- ausgewählt sind.

**22.** Anstrichmittel gemäß Anspruch 20 oder 21, worin $D^{4k}$ und $D^5{}_k$ jeweils unabhängig aus $-N(R_0)-CH_2-CH(OH)-CH_2-O-$, $-O-CH_2-CH(OH)-CH_2-N(R_0)-$, -C(O)-O-, -O-C(O)-, $-N(R_0)-C(O)-$, $-C(O)-N(R_0)-$, $-N(R_0)-$, -O- ausgewählt sind, und eine Einfachbindung sind.

**23.** Anstrichmittel gemäß einem der Ansprüche 20-22, worin $R_0$ Wasserstoff, Methyl, Ethyl oder Phenyl ist.

**24.** Anstrichmittel gemäß einem der Ansprüche 20-23, worin $R_x$, $R_y$, $R_z$ und $R_v$ jeweils unabhängig aus Ethylen and Isopropylen ausgewählt sind.

**25.** Anstrichmittel gemäß einem der Ansprüche 20-24, worin $R^2{}_j$ aus Alkylen, Alkenylen oder Arylen ausgewählt ist, die gegebenenfalls substituiert werden können.

**26.** Anstrichmittel gemäß einem der Ansprüche 20-25, worin die Gruppen $R^3{}_k$, $R^4{}_k$ und $R^5{}_k$ jeweils unabhängig aus der Gruppe $R^1{}_j$, wie in Formel (III) definiert, und Alkylen, Alkenylen, Arylen, Alkylarylen und Alkylarylalkylen ausgewählt sind.

**27.** Anstrichmittel gemäß einem der Ansprüche 20-26, worin die Gruppe $E_k$ aus gegebenenfalls substituiertem Methin (>CH-), >N-, gegebenenfalls substituierten Triradikalen von Benzol, gegebenenfalls substituierten Triradikalen von Naphthalen und gegebenenfalls substituierten Triradikalen von heterocyklischen Verbindungen ausgewählt ist .

**28.** Anstrichmittel gemäß einem der Ansprüche 20-27, worin die Summe der Parameter m(i) in den Segmentsets unter a) höchstens 50 beträgt, die Summe der Parameter n(j) in den Segmentsets unter b) höchstens 50 beträgt und die Summe der Parameter s(k) in den Segmentsets unter c) höchstens 30 beträgt.

**29.** Anstrichmittel gemäß einem der Ansprüche 20-28, worin X und Y jeweils unabhängig aus Wasserstoff, Methyl und Ethyl ausgewählt sind, und aus Phenyl, welches gegebenenfalls substituiert werden kann.

**30.** Anstrichmittel gemäß einem der Ansprüche 20-29, worin das Polymer B aus

a) von 0 bis 3 Segmentsets

$$-[R^1{}_i-D^1{}_i]_{m(i)}-,$$

b) von 0 bis 5 Segmentsets

$$-[R^2{}_j-D^2{}_j]_{n(j)}-,$$

und

c) 1 Segmentset

$$-[R^3{}_k-E_k-R^4{}_k-D^4{}_k]_{s(k)}-$$
$$|$$
$$R^5{}_k-D^5{}_k]-$$

besteht,

worin $R^1{}_i$, $R^2{}_j$, $R^3{}_k$, $R^4{}_k$, $R^5{}_k$, $D^1{}_i$, $D^2{}_j$, $D^4{}_k$, $D^5{}_k$, $E_k$, m(i), n(j), s(k) wie oben definiert sind,
unter der Voraussetzung, daß mindestens eines der in a) und b) definierten Segmentsets im Polymer anwesend ist.

**31.** Anstrichmittel gemäß einem der Ansprüche 20-30, worin der Gesamtpigmentgehalt der Zusammensetzung im

Bereich von 25-50% des Trockensubstanzvolumens des Anstrichmittels liegt.

**32.** Anstrichmittel gemäß einem der Ansprüche 20-31, worin das (die) in Seewasser lösliche(n) Pigment oder Pigmente mindestens 20% des Trockensubstanzvolumens des Anstrichmittels ausmacht/ausmachen.

**33.** Anstrichmittel gemäß einem der Ansprüche 20-32, worin jegliche in Seewasser unlöslichen Pigmente, falls anwesend, höchstens 30% des Trockensubstanzvolumens des Anstrichmittels ausmachen.

**34.** Anstrichmittel gemäß einem der Ansprüche 20-33, worin das Bindersystem 4-70% des Trockensubstanzvolumens des Anstrichmittels ausmacht.

**35.** Anstrichmittel gemäß einem der Ansprüche 20-34, worin das Polymer oder die Polymere der Formel II 20-100% des Trockensubstanzvolumens des Bindersystems ausmacht/ausmachen.

**36.** Anstrichmittel gemäß einem der Ansprüche 20-35, wobei das Bindersystem zusätzliche Binderkomponenten umfaßt, welche aus denselben Verbindungen ausgewählt sind, wie in Anspruch 14 definiert.

**37.** Anstrichmittel gemäß einem der Ansprüche 20-36, worin die zusätzliche(n) Binderkomponente(n) 0-80% des Trokkensubstanzvolumens des Bindersystems ausmacht/ausmachen.

**38.** Anstrichmittel gemäß einem der Ansprüche 20-37, worin das fäulnisverhindernde Mittel aus denselben Verbindungen ausgewählt ist, wie in Anspruch 16 definiert, und Mischungen davon.

**39.** Anstrichmittel gemäß einem der Ansprüche 20-38, worin der Gehalt des/der fäulnisverhindernden Mittel(s) im Bereich von 2-50% des Trockensubstanzvolumens des Anstrichmittels liegt.

**40.** Anstrichmittel gemäß einem der Ansprüche 20-39, worin die Pigmente aus denselben Verbindungen ausgewählt sind, wie in Anspruch 18 definiert, und Mischungen davon.

**41.** Anstrichmittel gemäß einem der Ansprüche 20-40, welches weiterhin einen flüssigen Träger umfaßt, der aus den Trägern ausgewählt ist, wie in Anspruch 19 definiert, und Mischungen davon.

**Revendications**

**1.** Composition de peinture antifouling érodable à l'eau de mer pour la protection des surfaces marines, comprenant un système de liant, au moins un pigment soluble dans l'eau de mer en quantité d'au moins 1 mg/litre à 25°C, au moins un agent antifouling qui peut consister en le pigment ou l'un des pigments, la teneur totale en pigments de la composition représentant de 10 à 60% du volume des matières solides de la composition de peinture, le ou les pigments solubles à l'eau de mer constituant au moins 10% du volume des matières solides de la composition de peinture, les pigments insolubles dans l'eau de mer éventuellement présents constituant au maximum 50% du volume des matières solides de la composition de peinture,

ledit système de liant comprenant au moins un polymère conférant l'érodabilité de formule générale (I)

$$X\text{-}D^3\text{-}A\text{-}Y \qquad (I)$$

dans laquelle A représente une chaîne polymère consistant en

a) de 1 à 5 segments

$$-[R^1{}_i\text{-}D^1{}_i]_{m(i)}-$$

dans lesquels le suffixe i représente le numéro du segment, et dans lesquels chaque m(i) représente un nombre entier d'au maximum 100, sous réserve que la somme totale des paramètres m(i) se situe dans

l'intervalle de 1 à 300, et

b) de 0 à 8 segments

$$-[R^2{}_j\text{-}D^2{}_j]_{n(j)}-$$

dans lesquels le suffixe j représente le numéro du segment, et dans lesquels chaque n(j) représente un nombre entier d'au maximum 100, sous réserve que la somme totale des paramètres n(j) se situe dans l'intervalle de 1 à 300,

les segments individuels $R^1{}_i$-$D^1{}_i$ et $R^2{}_j$-$D^2{}_j$ étant liés l'un à l'autre dans la chaîne polymère A comme un copolymère statistique, un copolymère alternant, un copolymère bloc ou une combinaison de ceux-ci;

$R^1{}_i$ dans un segment représente un groupe de formule (III)

$$-(R_x\text{-}O)_p\text{-}(R_y\text{-}O)_q\text{-}(R_z\text{-}O)_r\text{-}R_v- \qquad \text{(III)}$$

dans laquelle $R_x$, $R_y$, $R_z$ et $R_v$, indépendamment l'un de l'autre, représentent l'alkylène en $C_1$-$C_4$, et p, q et r représentent des nombres entiers dans l'intervalle de 0 à 100, sous réserve que la somme p + q + r est au moins 1;

$R^2{}_j$ dans un segment représente l'alkylène, l'alkénylène, l'arylène, l'alkylarylène, l'alkylarylalkylène, l'arylalkylarylène ou l'hétérocyclylène éventuellement substitués;

$D^1{}_i$ dans un segment, $D^2{}_j$ dans un segment et $D^3$ représentent, indépendamment l'un de l'autre, -C(O)-O-, -O-C(O)-, -C(O)-N($R_0$)-,-N($R_0$)-C(O)-, -O-, -S-, -N($R_0$)-, -O-C(O)-N($R_0$)-, -N($R_0$)-C(O)-O-, -C(O)-S-, -S-C(O)-, -O-C(O)-O-, -C($R_0$)=N-, -N=C($R_0$)-, -N ($R_0$)-$CH_2$-CH (OH) -$CH_2$-O-, -O-$CH_2$-CH (OH) -$CH_2$-N($R_0$)- ou -N($R_0$)-C (O)-N($R_0$)- dans lesquels $R_0$ représente l'alkyle en $C_1$-$C_{12}$, l'aryle ou H; et

X et Y représentent, indépendamment l'un de l'autre, l'hydrogène, ou un groupe alkyle, aryle ou hétérocyclyle éventuellement substitué.

**2.** Composition de peinture selon la revendication 1, dans laquelle $D^1{}_i$, $D^2{}_j$ et $D^3$, indépendamment l'un de l'autre, sont choisis parmi -N ($R_0$)-$CH_2$-CH (OH) -$CH_2$-O-, -O-$CH_2$-CH(OH)-$CH_2$-N($R_0$)-, -C(O)-O-, -O-C(O)-, -N($R_0$)-C (O)-, -C(O)-N($R_0$)-, -N($R_0$)-et -O-.

**3.** Composition de peinture selon la revendication 1 ou 2, dans laquelle $R_0$ représente l'hydrogène ou un groupe méthyle, éthyle ou phényle.

**4.** Composition de peinture selon l'une quelconque des revendications précédentes, dans laquelle $R_x$, $R_y$, $R_z$ et $R_v$, indépendamment l'un de l'autre, sont choisis parmi l'éthylène et l'isopropylène.

**5.** Composition de peinture selon l'une quelconque des revendications précédentes, dans laquelle $R^2{}_j$ est choisi parmi les groupes alkylène, alkénylène ou arylène éventuellement substitués.

**6.** Composition de peinture selon l'une quelconque des revendications précédentes, dans laquelle la somme totale des paramètres m(i) dans les segments identifiés dans a) est au maximum 50, et la somme totale des paramètres n(j) dans les segments identifiés dans b) est au maximum 50.

**7.** Composition de peinture selon l'une quelconque des revendications précédentes, dans laquelle X et Y représentent, indépendamment l'un de l'autre, l'hydrogène ou un groupe méthyle, éthyle ou phényle éventuellement substitué.

**8.** Composition de peinture selon l'une quelconque des revendications précédentes, dans laquelle la chaîne polymère A consiste en

a) de 1 à 3 segments

$$-[R^1{}_i\text{-}D^1{}_i]_{m(i)}-$$

et

b) de 1 à 5 segments

$$-[R^2{}_j\text{-}D^2{}_j]_{n(j)}-$$

dans lesquels $R^1_i$, $R^2_j$, $D^1_i$, $D^2_j$, m(i) et n(j) sont comme definis dans l'une quelconque des revendications précédentes.

**9.** Composition de peinture selon l'une quelconque des revendications précédentes, dans laquelle la teneur totale en pigments de la composition se situe dans l'intervalle de 25 à 50% du volume des matières solides de la composition de peinture.

**10.** Composition de peinture selon l'une quelconque des revendications précédentes, dans laquelle le ou les pigments solubles dans l'eau de mer constituent au moins 20% du volume des matières solides de la composition de peinture.

**11.** Composition de peinture selon l'une quelconque des revendications précédentes, dans laquelle les pigments solubles dans l'eau de mer éventuellement présents constituent au maximum 30% du volume des matières solides de la composition de peinture.

**12.** Composition de peinture selon l'une quelconque des revendications précédentes, dans laquelle le système de liant constitue de 4 à 70% du volume des matières solides de la composition de peinture.

**13.** Composition de peinture selon l'une quelconque des revendications précédentes, dans laquelle le ou les polymères de formule I constituent de 20 à 100% du volume des matières solides du système de liant.

**14.** Composition de peinture selon l'une quelconque des revendications précédentes, dans laquelle le système de liant comprend des composants de liant supplémentaires choisis dans le groupe constitué par la résine, les dérivés de résine, les huiles naturelles et leurs dérivés, les résines de polyester saturées, les résines de vinyle, les résines alkyde et les résines alkyde modifiées, les résines de hydrocarbure, les polyoléfines chlorées, les copolymères de styrène, les résines acryliques, les copolymères hydroxy-acrylate, les résines polyamide, les caoutchoucs cyclisés, les esters époxy, les uréthanes époxy, les polyuréthanes, les polymères époxy, les résines hydroxy-polyéther, les résines polyamine, les résines de silicone, les résines modifiées par silicone et leurs copolymères.

**15.** Composition de peinture selon l'une quelconque des revendications précédentes, dans laquelle le ou les composants de liant supplémentaires constituent de 0 à 80% du volume des matières solides du système de liant.

**16.** Composition de peinture selon l'une quelconque des revendications précédentes, dans laquelle l'agent antifouling est choisi parmi les organométalliques, les biocides métalliques, les composés de nitrogène hétérocycliques, les composés de soufre hétérocycliques, les dérivés de l'urée, les amides ou les imides d'acides carboxyliques, les acides sulfoniques et les acides sulfeniques, les sels ou les esters d'acides carboxyliques, les amines, le méthane substitué, la benzène substituée, les halogénures de phosphonium tétraalkyle, les dérivés de guanidine, les bisulfures et leurs mélanges.

**17.** Composition de peinture selon l'une quelconque des revendications précédentes, dans laquelle la teneur en l'agent ou les agents antifouling se situe dans l'intervalle de 2 à 50% du volume des matières solides de la composition de peinture.

**18.** Composition de peinture selon l'une quelconque des revendications précédentes, dans laquelle les pigments sont choisis parmi les différentes qualités de dioxyde de titane, d'oxyde de fer rouge, d'oxyde de zinc, de noir de carbone, de graphite, d'oxyde de fer jaune, de bleu de phtalocyanine et de vert de phtalocyanine, et parmi de composants analogues à des pigments, eux-mêmes choisis parmi le carbonate de calcium, la dolomie, le talc, le mica, le sulfate

de baryum, le kaolin et la farine de quartz.

**19.** Composition de peinture selon l'une quelconque des revendications précédentes, qui comprend en outre un véhicule liquide choisi parmi l'eau, les alcools, les hydrocarbures aliphatiques et aromatiques, les cétones, les éther-alcools, les esters, les hydrocarbures chlorés, les solvants amide et leurs mélanges.

**20.** Composition de peinture antifouling érodable à l'eau de mer pour la protection des surfaces marines, comprenant un système de liant, au moins un pigment soluble dans l'eau de mer en quantité d'au moins 1 mg/litre à 25°C, au moins un agent antifouling qui peut consister en le pigment ou l'un des pigments, la teneur totale en pigments de la composition représentant de 10 à 60% du volume des matières solides de la composition de peinture, le ou les pigments solubles à l'eau de mer constituant au moins 10% du volume des matières solides de la composition de peinture, les pigments insolubles dans l'eau de mer éventuellement présents constituant au maximum 50% du volume des matières solides de la composition de peinture,

ledit système de liant comprenant au moins un polymère conférant l'érodabilité de formule générale (II)

$$X\text{-}D^3\text{-}B\text{-}Y \qquad \text{(II)}$$

dans laquelle B représente une chaîne polymère consistant en

a) de 0 à 5 segments

$$-[R^1{}_i\text{-}D^1{}_i]_{m(i)}-$$

dans lesquels le suffixe i représente le numéro du segment, et dans lesquels chaque m(i) représente un nombre entier d'au maximum 100, sous réserve que la somme totale des paramètres m(i) se situe dans l'intervalle de 1 à 300, et

b) de 0 à 8 segments

$$-[R^2{}_j\text{-}D^2{}_j]_{n(j)}-$$

dans lesquels le suffixe j représente le numéro du segment, et dans lesquels chaque n(j) représente un nombre entier d'au maximum 100, sous réserve que la somme totale des paramètres n(j) est au maximum 300,

c) de 1 à 3 segments

$$\begin{array}{c} -[R^3{}_k-E_k-R^4{}_k-D^4{}_k]_{s(k)}- \\ | \\ [R^5{}_k-D^5{}_k]- \end{array}$$

dans lesquels le suffixe k représente le numéro du segment, et dans lesquels chaque s(k) représente un nombre entier d'au maximum 50, sous réserve que la somme totale des paramètres s(k) est au maximum 100,

sous réserve qu'au moins un des segments definis dans a) et b) est présent dans le polymère,
les segments individuels $R^1{}_i$-$D^1{}_i$, $R^2{}_j$-$D^2{}_j$ et $R^3{}_k$-$E_k$<($R^5{}_k$-$D^5{}_k$-)-$R^4{}_k$-$D^4{}_k$- étant liés l'un à l'autre dans le polymère B comme un copolymère statistique ramifié, un copolymère alternant, un copolymère bloc ramifié ou une combinaison de ceux-ci;

$R^1_i$ dans un segment représente un groupe de formule (III)

$$-(R_x\text{-}O)_p\text{-}(R_y\text{-}O)_q\text{-}(R_z\text{-}O)_r\text{-}R_v\text{-} \quad \text{(III)}$$

dans laquelle $R_x$, $R_y$, $R_z$ et $R_v$, indépendamment l'un de l'autre, représentent l'alkylène en $C_1$-$C_4$, et p, q et r représentent des nombres entiers dans l'intervalle de 0 à 100, sous réserve que la somme p + q + r est au moins 1;

$R^2_j$ dans un segment représente l'alkylène, l'alkénylène, l'arylène, l'alkylarylène, l'alkylarylalkylène, l'arylalkylarylène ou l'hétérocyclylène éventuellement substitués;

$R^3_k$, $R^4_k$ et $R^5_k$ dans un segment représentent les mêmes biradicaux que définis ci-dessus pour $R^1_i$ et $R^2_j$ ou une liaison simple;

$D^1_i$ dans un segment, $D^2_j$ dans un segment et $D^3$ représentent, indépendamment l'un de l'autre, -C(O)-O-, -O-C(O)-, -C(O)-N($R_0$)-, -N($R_0$)-C(O)-, -O-, -S-, -N($R_0$)-, -O-C(O)-N($R_0$)-, -N($R_0$)-C(O)-O-, -C(O)-S-, -S-C(O)-, -O-C(O)-O-, -C($R_0$)=N-, -N=C($R_0$)-, -N($R_0$)-$CH_2$-CH(OH)-$CH_2$-O-, -O-$CH_2$-CH(OH)-$CH_2$-N ($R_0$)- ou -N($R_0$)-C(O)-N($R_0$)- dans lesquels $R_0$ représente l'alkyle en $C_1$-$C_{12}$, l'aryle ou H; et

$D^4_k$ dans un segment et $D^5_k$ dans un segment ont la même signification que définie ci-dessus pour $D^1_i$ ou une liaison simple;

$E_k$ dans un segment est choisi parmi >$CR^5$-, >N-, >P-, >P(=O)-, >Si($R^6$)-, des triradicaux aryle, des triradicaux cycloalkyle et des triradicaux hétérocyclyle éventuellement substitués, dans lesquelles $R^5$ représente l'hydrogène, l'hydroxyle, l'alkoxy en $C_1$-$C_{12}$, l'alkyle en $C_1$-$C_{12}$, l'alkényle en $C_2$-$C_{12}$, l'aryle ou $D^3$-H, et $R^6$ représente l'hydrogène, l'alkyle en $C_1$-$C_{12}$, l'alkoxy en $C_1$-$C_{12}$, l'alkényle en $C_2$-$C_{12}$ ou l'aryle; et

X et Y représentent, indépendamment l'un de l'autre, l'hydrogène, ou un groupe alkyle, aryle ou hétérocyclyle éventuellement substitué.

**21.** Composition de peinture selon la revendication 20, dans laquelle $D^1_i$, $D^2_j$ et $D^3$, indépendamment l'un de l'autre, sont choisis parmi -N($R_0$)-$CH_2$-CH (OH)-$CH_2$-O-, -O-$CH_2$-CH(OH)-$CH_2$-N($R_0$)-, -C(O)-O-, -O-C(O)-, -N($R_0$)-C(O)-, -C(O)-N($R_0$)-, -N($R_0$)-et -O-.

**22.** Composition de peinture selon la revendication 20 ou 21, dans laquelle $D^4_k$ et $D^5_k$, indépendamment l'un de l'autre, sont choisis parmi -N($R_0$)-$CH_2$-CH(OH) -$CH_2$-O-, -O-$CH_2$-CH(OH)-$CH_2$-N($R_0$)-, -C(O)-O-, -O-C(O)-, -N($R_0$)-C(O)-, -c(O)-N($R_0$)-, -N($R_0$)-, -O- et une liaison simple.

**23.** Composition de peinture selon l'une quelconque des revendications 20 à 22, dans laquelle $R_0$ représente l'hydrogène ou un groupe méthyle, éthyle ou phényle.

**24.** Composition de peinture selon l'une quelconque des revendications 20 à 23, dans laquelle $R_x$, $R_y$, $R_z$ et $R_v$, indépendamment l'un de l'autre, sont choisis parmi l'éthylène et l'isopropylène.

**25.** Composition de peinture selon l'une quelconque des revendications 20 à 24, dans laquelle $R^2_j$ est choisi parmi les groupes alkylène, alkénylène ou arylène éventuellement substitués.

**26.** Composition de peinture selon l'une quelconque des revendications 20 à 25, dans laquelle les groupes $R^3_k$, $R^4_k$ et $R^5_k$, indépendamment l'un de l'autre, sont choisis dans le groupe de formule (III) comme défini pour $R^1_j$, l'alkylène, l'alkénylène, l'arylène, l'alkylarylène et l'alkylarylalkylène.

**27.** Composition de peinture selon l'une quelconque des revendications 20 à 26, dans laquelle le groupe Ek est choisi parmi le méthine (>CH-) éventuellement substitué, >N-, les triradicaux de benzène éventuellement substitués, les triradicaux de naphthalène éventuellement substitués et les triradicaux de composés hétérocycliques éventuellement substitués.

**28.** Composition de peinture selon l'une quelconque des revendications 20 à 27, dans laquelle la somme totale des paramètres m(i) dans les segments identifiés dans a) est au maximum 50, la somme totale des paramètres n(j) dans les segments identifiés dans b) est au maximum 50, et la somme totale des paramètres s(k) dans les segments identifiés dans c) est au maximum 30.

**29.** Composition de peinture selon l'une quelconque des revendications 20 à 28, dans laquelle X et Y représentent, indépendamment l'un de l'autre, l'hydrogène ou un groupe méthyle, éthyle ou phényle éventuellement substitué.

**30.** Composition de peinture selon l'une quelconque des revendications 20 à 29, dans laquelle le polymère B consiste en

a) de 0 à 3 segments

$$-[R^1{}_i\text{-}D^1{}_i]_{m(i)}-,$$

b) de 0 à 5 segments

$$-[R^2{}_j\text{-}D^2{}_j]_{n(j)}-,$$

et

c) 1 segment

$$\begin{array}{c} -[R^3{}_k-E_k-R^4{}_k-D^4{}_k]_{s(k)}- \\ | \\ [R^5{}_k-D^5{}_k]- \end{array}$$

dans lesquels $R^1{}_i$, $R^2{}_j$, $R^3{}_k$, $R^4{}_k$, $R^5{}_k$, $D^1{}_i$, $D^2{}_j$, $D^4{}_k$, $D^5{}_k$, $E_k$, m(i), n(j) et s(k) sont comme definis ci-dessus,

sous réserve qu'au moins un des segments definis dans a) et b) est présent dans le polymère.

**31.** Composition de peinture selon l'une quelconque des revendications 20 à 30, dans laquelle la teneur totale en pigments de la composition se situe dans l'intervalle de 25 à 50% du volume des matières solides de la composition de peinture.

**32.** Composition de peinture selon l'une quelconque des revendications 20 à 31, dans laquelle le ou les pigments solubles dans l'eau de mer constituent au moins 20% du volume des matières solides de la composition de peinture.

**33.** Composition de peinture selon l'une quelconque des revendications 20 à 32, dans laquelle les pigments solubles dans l'eau de mer éventuellement présents constituent au maximum 30% du volume des matières solides de la composition de peinture.

**34.** Composition de peinture selon l'une quelconque des revendications 20 à 33, dans laquelle le système de liant constitue de 4 à 70% du volume des matières solides de la composition de peinture.

**35.** Composition de peinture selon l'une quelconque des revendications 20 à 34, dans laquelle le ou les polymères de formule II constituent de 20 à 100% du volume des matières solides du système de liant.

**36.** Composition de peinture selon l'une quelconque des revendications 20 à 35, dans laquelle le système de liant comprend des composants de liant supplémentaires choisis parmi les mêmes composés que définis dans la revendication 14.

**37.** Composition de peinture selon l'une quelconque des revendications 20 à 36, dans laquelle le ou les composants de liant supplémentaires constituent de 0 à 80% du volume des matières solides du système de liant.

**38.** Composition de peinture selon l'une quelconque des revendications 20 à 37, dans laquelle l'agent antifouling est choisi parmi les mêmes composés que définis dans la revendication 16, et leurs mélanges.

**39.** Composition de peinture selon l'une quelconque des revendications 20 à 38, dans laquelle la teneur en l'agent ou les agents antifouling se situe dans l'intervalle de 2 à 50% du volume des matières solides de la composition de peinture.

**40.** Composition de peinture selon l'une quelconque des revendications 20 à 39, dans laquelle les pigments sont choisis parmi les mêmes composés que définis dans la revendication 18, et leurs mélanges.

**41.** Composition de peinture selon l'une quelconque des revendications 20 à 40, qui comprend en outre un véhicule liquide choisi parmi les mêmes véhicules que définis dans la revendication 19, et leurs mélanges.